(19)

Europäisches Patentamt
European Patent Office
Office européen des brevets

(11) **EP 4 432 714 A1**

(12) **EUROPEAN PATENT APPLICATION**
published in accordance with Art. 153(4) EPC

(43) Date of publication:
**18.09.2024 Bulletin 2024/38**

(21) Application number: **22903206.5**

(22) Date of filing: **23.11.2022**

(51) International Patent Classification (IPC):
**H04W 16/10** (2009.01)

(52) Cooperative Patent Classification (CPC):
**H04W 16/10; H04W 72/0453; H04W 72/1263**

(86) International application number:
**PCT/CN2022/133832**

(87) International publication number:
**WO 2023/103783 (15.06.2023 Gazette 2023/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.12.2021 CN 202111489076**

(71) Applicant: **Huawei Technologies Co., Ltd.
Shenzhen, Guangdong 518129 (CN)**

(72) Inventors:
• **LU, Zhenwei
  Shenzhen, Guangdong 518129 (CN)**
• **TANG, Yujian
  Shenzhen, Guangdong 518129 (CN)**
• **WU, Yiling
  Shenzhen, Guangdong 518129 (CN)**

(74) Representative: **Maiwald GmbH
Engineering
Elisenhof
Elisenstrasse 3
80335 München (DE)**

(54) **RESOURCE ALLOCATION METHOD, APPARATUSES, AND COMMUNICATION DEVICE**

(57) This application provides a resource allocation method and apparatus, and a communication device. The method includes: A first apparatus receives a first index value from a second apparatus, where the first index value is an index value in a first index value set, the first index value set includes a plurality of index values, each index value corresponds to a combination of values of all parameters in a parameter group, and the first index value corresponds to a combination of values of all parameters in a parameter group. The parameter group includes a plurality of parameters, and the combination of values of all parameters in a parameter group corresponding to the first index value corresponds to a first frequency domain resource. The first apparatus sends uplink information on the first frequency domain resource based on the first index value. This can improve resource utilization.

400

| Second apparatus | | First apparatus |

S401: Send a first index value, where the first index value belongs to a first index value set, the first index value set includes a plurality of index values, each index value corresponds to values of all parameters in a parameter group, and the parameter group includes a plurality of parameters

S402: Send uplink information on a first frequency domain resource

FIG. 4

## Description

This application claims priority to Chinese Patent Application No. 202111489076.1, filed with the China National Intellectual Property Administration on December 7, 2021 and entitled "RESOURCE ALLOCATION METHOD AND APPARATUS, AND COMMUNICATION DEVICE", which is incorporated herein by reference in its entirety.

## TECHNICAL FIELD

This application relates to the communication field, and more specifically, to a resource allocation method and apparatus, and a communication device.

## BACKGROUND

A radio frequency identification (radio frequency identification, RFID) technology is a non-contact automatic identification technology. A reader sends an excitation signal to a tag to provide energy for the tag, and the tag may use the excitation signal from the reader as a carrier to reflect uplink signaling to the reader. The reader can identify the tag in an inventory process and perform operations such as reading and writing on the tag.

In a current RFID technology, to ensure coverage of uplink information and data that are sent by the tag, a bandwidth (that is, an uplink bandwidth) of the uplink information and data that are sent by the tag is narrow, and only a part of uplink bandwidth resources are used. Therefore, problems of a waste of uplink bandwidth resources and a small communication capacity exist.

## SUMMARY

Embodiments of this application provide a resource allocation method and apparatus, and a communication device, to improve resource utilization.

According to a first aspect, a resource allocation method is provided. The method may be performed by a first apparatus or a module (for example, a chip) configured in (or used in) the first apparatus.

The method includes: A first apparatus receives a first index value from a second apparatus, where the first index value is an index value in a first index value set, the first index value set includes a plurality of index values, each index value corresponds to a combination of values of all parameters in a parameter group, and the first index value corresponds to a combination of values of all parameters in a parameter group. The parameter group includes a plurality of parameters. The combination of values of all parameters in a parameter group corresponding to the first index value corresponds to a first frequency domain resource. The first apparatus sends uplink information on the first frequency domain resource based on the first index value.

This application proposes that a plurality of communication apparatuses may send uplink information on different frequency domain resources in an uplink bandwidth resource, thereby reducing a waste of resources. To enable the communication apparatuses to send the uplink information on the different frequency domain resources, this application proposes a manner in which the second apparatus may send the first index value to the first apparatus based on the foregoing solution, so that the uplink information sent by the first apparatus based on the combination of values of all parameters in a parameter group corresponding to the first index value is carried on the first frequency domain resource corresponding to the first index value. In this way, the second apparatus may allocate, based on different index values, the different frequency domain resources used to carry the uplink information to the plurality of communication apparatuses, so that the plurality of communication apparatuses can simultaneously send the uplink information through the different frequency domain resources in an uplink frequency band, thereby reducing a waste of uplink frequency domain resources and improving frequency domain resource utilization.

In addition, the foregoing solution provided in this application may be applied to a scenario in which a reflective communication technology (RFID technology) and a cellular technology (for example, a new radio (new radio, NR) technology and a long term evolution (long term evolution, LTE) technology) share a physical resource for separate communication. A communication bandwidth in the cellular technology may range from tens of MHz to hundreds of MHz, a minimum allocation unit of a frequency domain resource in the cellular technology is a physical resource block (physical resource block, PRB) whose bandwidth is 180 kHz, and a bandwidth of the minimum allocation unit is also far greater than tens of kHz of uplink information (or uplink data) in the RFID technology. According to the foregoing solution provided in this application, a reader and a tag can reach a consensus on a frequency domain resource used for communication, thereby reducing a waste of uplink frequency domain resources and improving frequency domain resource utilization.

Optionally, the parameter group includes one or more of the following parameters: a first parameter, a second parameter, a third parameter, and a fourth parameter.

The first parameter is used for determining bit transmission duration in the uplink information.

In an implementation, the first parameter may be a quantity of repetition times of each bit in an encoded bit sequence, and the encoded bit sequence is a bit sequence obtained by encoding an information bit in the uplink information.

The second parameter indicates a quantity of repetition times of the uplink information.

In an implementation, the quantity of repetition times of the uplink information may be specifically a quantity of repetition times of the information bit in the uplink information

In another implementation, the quantity of repetition times of the uplink information may be a quantity of repetition times of an encoded information bit in the uplink information.

The third parameter indicates a first frequency of the frequency domain resource.

Optionally, the first frequency is a center frequency, a start frequency, or an end frequency of the frequency domain resource.

In an implementation, the third parameter is an offset of the first frequency of the frequency domain resource relative to a reference frequency.

The fourth parameter indicates a frequency domain bandwidth of the frequency domain resource or a data rate.

According to the foregoing solution, the parameter group may include one or more of the first parameter, the second parameter, the second parameter, and the fourth parameter, so that the first apparatus may determine, based on the first index value, the values of all the parameters in the parameter group of the first frequency domain resource, to determine a parameter for sending the uplink information. This implements that the sent uplink information is carried, in frequency domain, on the first frequency domain resource indicated by the second apparatus. In this way, the two parties reach a consensus on the first frequency domain resource that carries the uplink information, thereby reducing a case in which information transmission fails because no consensus is reached, and improving information transmission reliability.

In an implementation, the parameter group includes the first parameter and the second parameter. The first apparatus determines an offset of a center frequency of the first frequency domain resource relative to the reference frequency based on a value of the first parameter of the first frequency domain resource and first duration.

Optionally, the first duration is transmission duration of an encoded bit sequence obtained by encoding an information bit when the quantity of repetition times of the encoded information bit is 1.

Alternatively, the first duration is minimum transmission duration of an encoded bit sequence obtained by encoding an information bit.

The first apparatus determines a frequency domain bandwidth of the first frequency domain resource based on the value of the first parameter of the first frequency domain resource and a value of the second parameter of the first frequency domain resource, and the first duration. Alternatively, the first apparatus determines a transmission rate of the uplink information based on the value of the first parameter of the first frequency domain resource and a value of the second parameter of the first frequency domain resource, and the first duration. Then, the first apparatus may determine the frequency domain bandwidth of the first frequency domain resource based on the transmission rate of the uplink information.

In this implementation, the first apparatus may determine the center frequency and the frequency domain bandwidth that are of the first frequency domain resource based on the value of the first parameter and the value of the second parameter, that is, determine a frequency domain location of the first frequency domain resource.

According to the foregoing solution, the first apparatus may determine, based on the combination of values of all parameters in a parameter group corresponding to the first index value, the first frequency domain resource that carries the uplink information, so that the first apparatus and the second apparatus can reach, based on the first index value, a consensus on the first frequency domain resource that carries the uplink information, thereby reducing a case in which information transmission fails because no consensus is reached, and improving information transmission reliability.

Optionally, a value B of the first parameter of the first frequency domain resource satisfies:

$$B = 1/(Tu * \Delta f);$$

and

a value M of the second parameter of the first frequency domain resource satisfies:

$$M = 1/(Tu * B * S) \text{ or } M = \Delta f/S,$$

where

$\Delta f$ is the offset of the first frequency of the first frequency domain resource relative to the reference frequency, S is the transmission rate of the uplink information, and Tu is the first duration.

Optionally, the parameter group includes the third parameter. The first apparatus may determine a quantity of repetition times of the encoded bit sequence based on the third parameter and the first duration.

According to the foregoing solution, if the parameter group includes the third parameter, the first apparatus may determine the quantity of repetition times of the encoded bit sequence based on the third parameter and the minimum transmission duration (that is, the first duration) of the encoded bit, so that after the first apparatus repeats the encoded bit sequence based on the quantity of repetition times of the encoded bit sequence, the uplink information is carried, in frequency domain, on the first frequency domain resource indicated by the second apparatus. In this way, the uplink information sent by the first apparatus may be carried on the first frequency domain resource in the uplink bandwidth resource, and the first apparatus and the second apparatus can reach a consensus on the frequency domain resource that carries the uplink information.

In an implementation, the first duration is obtained by the first apparatus from the second apparatus.

In another implementation, the first apparatus determines the first duration based on a bandwidth of a first frequency band, where the first frequency band includes the first frequency domain resource.

In still another implementation, the parameter group further includes the first duration.

According to the foregoing solution, the first apparatus may obtain the minimum transmission duration (that is, the first duration) of the encoded bit in the foregoing manner, so that the first apparatus can determine the first frequency domain resource based on the first duration, or determine an encoding parameter and/or a transmission parameter of the information bit, so that the uplink information is carried on the first frequency domain resource in frequency domain.

Optionally, the parameter group includes the fourth parameter. The first apparatus may determine the quantity of repetition times of the uplink information based on the fourth parameter and the quantity of repetition times of each bit in the encoded bit sequence.

According to the foregoing solution, if the parameter group includes the fourth parameter, the first apparatus may determine the quantity of repetition times of the uplink information based on the fourth parameter and the quantity of repetition times of each bit in the encoded bit sequence, so that the uplink information is carried, in frequency domain, on the first frequency domain resource indicated by the second apparatus. Therefore, the two parties reach a consensus on the first frequency domain resource that carries the uplink information.

Optionally, the method further includes: The first apparatus receives second information from the second apparatus, where the second information indicates a bandwidth of a first frequency band and is denoted as a first bandwidth, and the first frequency band includes the first frequency domain resource. The first apparatus determines, based on the first bandwidth and a first correspondence, the first index value set corresponding to the first bandwidth. A plurality of bandwidths in the first correspondence one-to-one correspond to a plurality of index value sets, and in the first correspondence, the first bandwidth corresponds to the first index value set.

According to the foregoing solution, the reflective communication technology may use frequency domain resources of different bandwidths in the cellular technology for communication, and each bandwidth corresponds to one index value set (that is, the first correspondence). The first apparatus and the second apparatus may determine, based on the first bandwidth of the first frequency band and the first correspondence, that an index value set to which the first index value belongs is the first index value set corresponding to the first bandwidth. Therefore, the first apparatus and the second apparatus can reach a consensus on a used index value set.

Optionally, the method further includes: The first apparatus receives third information from the second apparatus, where the third information indicates a second frequency band in the first frequency band, and the first frequency domain resource may be specifically a frequency domain resource in the second frequency band.

Optionally, the first apparatus may specifically determine the first frequency domain resource based on the second frequency band and the values of all the parameters in the parameter group corresponding to the first index value. According to the foregoing solution, before sending the first index value, the second apparatus may indicate, to the first apparatus, a subband (that is, the second frequency band) in a first frequency band to which a candidate frequency domain resource belongs, so that the first apparatus may determine the first frequency domain resource based on the second frequency band and the first index value after receiving the first index value.

In an implementation, frequency domain locations of a plurality of subbands may be predefined in the first frequency band, and each subband corresponds to one piece of identification information. The plurality of subbands include the second frequency band. The third information sent by the second apparatus may include identification information of the second frequency band.

In another implementation, the third information indicates a first offset, and a bandwidth of the second frequency band is predefined. The first offset is a frequency offset of a second frequency of the second frequency band relative to a third frequency of the first frequency band.

For example, the second frequency is a center frequency of the second frequency band, and the third frequency is a center frequency of the first frequency band.

In still another implementation, the third information indicates a first offset and a bandwidth of the second frequency band.

The first offset is a frequency offset of a second frequency of the second frequency band relative to a third frequency of the first frequency band.

According to the foregoing solution, the second apparatus may indicate the second frequency band in one of the foregoing indication manners of the third information, and the first apparatus reads the third information in a corresponding indication manner, to reach a consensus on the indication manner of the third information, so that the second apparatus can accurately notify the second frequency band.

According to a second aspect, a resource allocation method is provided. For beneficial effect, refer to the description of the first aspect. Details are not described herein again. The method may be performed by a second apparatus or a module (for example, a chip) configured in (or used in) the second apparatus.

The method includes: A second apparatus sends a first index value in a first index value set to a first apparatus, where the first index value set includes a plurality of index values, each index value corresponds to a combination of values of all parameters in a parameter group, the first index value corresponds to a combination of values of all parameters in a parameter group, the parameter group includes a plurality of parameters, and the combination of values of all parameters in a parameter group corresponding to the first index value corresponds to a first frequency domain resource. The second apparatus receives uplink information from the first apparatus on the first frequency domain resource.

Optionally, the parameter group includes one or more of the following parameters: a first parameter, a second parameter, a third parameter, and a fourth parameter.

The first parameter is used for determining bit transmission duration in the uplink information.

In an optional implementation, the first parameter may be a quantity of repetition times of each bit in an encoded bit sequence, and the encoded bit sequence is a bit sequence obtained by encoding an information bit in the uplink information.

The second parameter indicates a quantity of repetition times of the uplink information.

In a possible implementation, the quantity of repetition times of the uplink information may be specifically a quantity of repetition times of the information bit in the uplink information

In another possible implementation, the quantity of repetition times of the uplink information may be a quantity of repetition times of an encoded information bit in the uplink information.

The third parameter indicates a first frequency of the frequency domain resource.

Optionally, the first frequency is a center frequency, a start frequency, or an end frequency of the frequency domain resource.

In a possible implementation, the third parameter is an offset of the first frequency of the frequency domain resource relative to a reference frequency.

The fourth parameter indicates a frequency domain bandwidth of the frequency domain resource or a data rate.

Optionally, the method further includes: The second apparatus sends second information indicating a first bandwidth to the first apparatus, where the first bandwidth is a bandwidth of a first frequency band, and the first frequency band includes the first frequency domain resource. The second apparatus may determine, based on the first bandwidth and a first correspondence, the first index value set corresponding to the first bandwidth. A plurality of bandwidths in the first correspondence one-to-one correspond to a plurality of index value sets, and in the first correspondence, the first bandwidth corresponds to the first index value set.

Optionally, the method further includes: The second apparatus sends third information to the first apparatus, where the third information indicates a second frequency band in the first frequency band, and the first frequency domain resource is a frequency domain resource in the second frequency band.

Optionally, the method further includes: The second apparatus determines the first index value based on the second frequency band and the parameter values of all the parameters in the parameter group of the first frequency domain resource.

In an implementation, the third information includes identification information of the second frequency band.

In another implementation, the third information includes a first offset, and a bandwidth of the second frequency band is predefined.

In still another implementation, the third information includes a first offset and a bandwidth of the second frequency band.

The first offset is a frequency offset of a second frequency of the second frequency band relative to a third frequency of the first frequency band.

According to a third aspect, a communication apparatus is provided. In a design, the apparatus may include modules that one-to-one correspond to the method/operations/steps/actions described in the first aspect. The modules may be hardware circuits, may be software, or may be implemented by using a combination of a hardware circuit and software. In a design, the apparatus includes: a transceiver unit, configured to receive a first index value from a second apparatus, where the first index value is an index value in a first index value set including a plurality of index values, each index value in the first index value set corresponds to a combination of values of all parameters in a parameter group, and the first index value corresponds to a combination of values of all parameters in a parameter group, where the parameter group includes a plurality of parameters, and the combination of values of all parameters in a parameter group corresponding to the first index value corresponds to a first frequency domain resource; and a processing unit, configured to determine to send uplink information, where the transceiver unit is further configured to send the uplink information on the first frequency domain resource.

Optionally, the parameter group includes one or more of the following parameters: a first parameter, a second parameter, a third parameter, and a fourth parameter.

The first parameter is used for determining bit transmission duration in the uplink information.

In an implementation, the first parameter may be a quantity of repetition times of each bit in an encoded bit sequence, and the encoded bit sequence is a bit sequence obtained by encoding an information bit in the uplink information.

The second parameter indicates a quantity of repetition times of the uplink information.

In an implementation, the quantity of repetition times of the uplink information may be specifically a quantity of repetition times of the information bit in the uplink information

In another implementation, the quantity of repetition times of the uplink information may be a quantity of repetition times of an encoded information bit in the uplink information.

The third parameter indicates a first frequency of the frequency domain resource.

Optionally, the first frequency is a center frequency, a start frequency, or an end frequency of the frequency domain resource.

In an implementation, the third parameter is an offset of the first frequency of the frequency domain resource relative to a reference frequency.

The fourth parameter indicates a frequency domain bandwidth of the frequency domain resource or a data rate.

In an implementation, the parameter group includes the first parameter and the second parameter. The processing unit is further configured to determine an offset of a center frequency of the first frequency domain resource relative to the reference frequency based on a value of the first parameter of the first frequency domain resource and first duration.

Optionally, the first duration is transmission duration of an encoded bit sequence obtained by encoding an information bit when the quantity of repetition times of the encoded information bit is 1.

Alternatively, the first duration is minimum transmission duration of an encoded bit sequence obtained by encoding an information bit.

The processing unit is further configured to determine a frequency domain bandwidth of the first frequency domain resource based on the value of the first parameter of the first frequency domain resource and a value of the second parameter of the first frequency domain resource, and the first duration. Alternatively, the processing unit is further configured to determine a transmission rate of the uplink information based on the value of the first parameter of the first frequency domain resource and a value of the second parameter of the first frequency domain resource, and the first duration. Then, the first apparatus may determine the frequency domain bandwidth of the first frequency domain resource based on the transmission rate of the uplink information.

In this implementation, the processing unit is further configured to determine the center frequency and the frequency domain bandwidth that are of the first frequency domain resource based on the value of the first parameter and the value of the second parameter, that is, determine a frequency domain location of the first frequency domain resource.

Optionally, a value B of the first parameter of the first frequency domain resource satisfies:

$$B=1/(T_u * \Delta f);$$

and
a value M of the second parameter of the first frequency domain resource satisfies:

$$M=1/(T_u * B * S) \text{ or } M=\Delta f/S,$$

where
$\Delta f$ is the offset of the first frequency of the first frequency domain resource relative to the reference frequency, S is the transmission rate of the uplink information, and $T_u$ is the first duration.

Optionally, the parameter group includes the third parameter. The processing unit is further configured to determine a quantity of repetition times of the encoded bit sequence based on the third parameter and the first duration. The first duration is minimum transmission duration of an encoded bit sequence obtained by encoding an information bit. The encoded bit sequence is a bit sequence obtained by encoding an information bit in the uplink information.

In an implementation, the first duration is obtained from the second apparatus.

In another implementation, the processing unit is further configured to determine the first duration based on a bandwidth of a first frequency band, where the first frequency band includes the first frequency domain resource.

In still another implementation, the parameter group further includes the first duration.

Optionally, the parameter group includes the fourth parameter. The processing unit is further configured to determine the quantity of repetition times of the uplink information based on the fourth parameter and the quantity of repetition times of each bit in the encoded bit sequence.

Optionally, the transceiver unit is further configured to receive second information from the second apparatus, where the second information indicates a bandwidth of a first frequency band and is denoted as a first bandwidth, and the first frequency band includes the first frequency domain resource. The processing unit is further configured to determine, based on the first bandwidth and a first correspondence, the first index value set corresponding to the first bandwidth. A plurality of bandwidths in the first correspondence one-to-one correspond to a plurality of index value sets. In the first correspondence, the first bandwidth corresponds to the first index value set.

Optionally, the transceiver unit is further configured to receive third information from the second apparatus, where the third information indicates a second frequency band in the first frequency band, and the first frequency domain resource is a frequency domain resource in the second frequency band.

Optionally, the processing unit is further configured to determine the first frequency domain resource based on the second frequency band and the values of all the parameters in the parameter group corresponding to the first index value.

In an implementation, the third information includes identification information of the second frequency band.

In another implementation, the third information includes a first offset, and a bandwidth of the second frequency band is predefined.

In still another implementation, the third information includes a first offset and a bandwidth of the second frequency band.

The first offset is a frequency offset of a second frequency of the second frequency band relative to a third frequency of the first frequency band.

According to a fourth aspect, a communication apparatus is provided. In a design, the apparatus may include modules that one-to-one correspond to the method/operations/steps/actions described in the second aspect. The modules may be hardware circuits, may be software, or may be implemented by using a combination of a hardware circuit and software. In a design, the apparatus includes: a processing unit, configured to determine a first index value, where the first index value belongs to a first index value set, the first index value set includes a plurality of index values, each index value corresponds to a combination of values of all parameters in a parameter group, the parameter group includes a plurality of parameters, the first index value corresponds to a combination of values of all parameters in a parameter group, and the combination of values of all parameters in a parameter group corresponding to the first index value corresponds to a first frequency domain resource; and a transceiver unit, configured to send the first index value to a first apparatus, where the transceiver unit is further configured to receive uplink information from the first apparatus on the first frequency domain resource.

Optionally, the parameter group includes one or more of the following parameters: a first parameter, a second parameter, a third parameter, and a fourth parameter.

The first parameter is used for determining bit transmission duration in the uplink information.

In a possible implementation, the first parameter may be a quantity of repetition times of each bit in an encoded bit sequence, and the encoded bit sequence is a bit sequence obtained by encoding an information bit in the uplink information.

The second parameter indicates a quantity of repetition times of the uplink information.

In a possible implementation, the quantity of repetition times of the uplink information may be specifically a quantity of repetition times of the information bit in the uplink information

In another possible implementation, the quantity of repetition times of the uplink information may be a quantity of repetition times of an encoded information bit in the uplink information.

The third parameter indicates a first frequency of the frequency domain resource.

Optionally, the first frequency is a center frequency, a start frequency, or an end frequency of the frequency domain resource.

In a possible implementation, the third parameter is an offset of the first frequency of the frequency domain resource relative to a reference frequency.

The fourth parameter indicates a frequency domain bandwidth of the frequency domain resource or a data rate.

Optionally, the transceiver unit is further configured to send second information to the first apparatus, where the second information indicates a bandwidth of a first frequency band and is denoted as a first bandwidth, and the first frequency band includes the first frequency domain resource. The processing unit is further configured to determine, based on the first bandwidth and a first correspondence, the first index value set corresponding to the first bandwidth. A plurality of bandwidths in the first correspondence one-to-one correspond to a plurality of index value sets. In the first correspondence the first bandwidth corresponds to the first index.

Optionally, the transceiver unit is further configured to send third information to the first apparatus, where the third information indicates a second frequency band in the first frequency band, and the first frequency domain resource is a frequency domain resource in the second frequency band.

Optionally, the processing unit is further configured to determine the first index value based on the second frequency band and the parameter values of all the parameters in the parameter group of the first frequency domain resource.

In an implementation, the third information includes identification information of the second frequency band.

In another implementation, the third information includes a first offset, and a bandwidth of the second frequency band is predefined.

In still another implementation, the third information includes a first offset and a bandwidth of the second frequency band.

The first offset is a frequency offset of a second frequency of the second frequency band relative to a third frequency of the first frequency band.

According to a fifth aspect, a communication apparatus is provided, including a processor. The processor may implement the method in any one of the first aspect and the possible implementations of the first aspect. Optionally, the communication apparatus further includes a memory. The processor is coupled to the memory, and may be configured to execute instructions in the memory, to implement the method in any one of the first aspect and the possible implementations of the first aspect. Optionally, the communication apparatus further includes a communication interface, and the processor is coupled to the communication interface.

In an implementation, the communication apparatus is a communication device. The communication interface may be a transceiver or an input/output interface.

In another implementation, the communication apparatus is a chip. The communication interface may be an input/output interface.

Optionally, the transceiver may be a transceiver circuit. Optionally, the input/output interface may be an input/output circuit.

According to a sixth aspect, a communication apparatus is provided, including a processor. The processor may implement the method in any one of the second aspect and the possible implementations of the second aspect. Optionally, the communication apparatus further includes a memory. The processor is coupled to the memory, and may be configured to execute instructions in the memory, to implement the method in any one of the second aspect and the possible implementations of the second aspect. Optionally, the communication apparatus further includes a communication interface, and the processor is coupled to the communication interface.

In an implementation, the communication apparatus is a communication device, and the communication interface may be a transceiver or an input/output interface.

In another implementation, the communication apparatus is a chip, and the communication interface may be an input/output interface.

Optionally, the transceiver may be a transceiver circuit. Optionally, the input/output interface may be an input/output circuit.

According to a seventh aspect, a processor is provided, including an input circuit, an output circuit, and a processing circuit. The processing circuit is configured to receive a signal through the input circuit, and transmit a signal through the output circuit, to enable the processor to perform the method in any one of the first aspect and the possible implementations of the first aspect, or implement the method in any one of the second aspect and the possible implementations of the second aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, but not limited to, a receiver, a signal output by the output circuit may be output to, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eighth aspect, a computer program product is provided. The computer program product includes a computer program (which may also be referred to as code or instructions). When the computer program is run, a computer is enabled to perform the method in any one of the first aspect and the possible implementations of the first aspect, or implement the method in any one of the second aspect and the possible implementations of the second aspect.

According to a ninth aspect, a computer-readable storage medium is provided. The computer-readable storage medium stores a computer program (which may also be referred to as code or instructions). When the computer program is run on a computer, the computer is enabled to perform the method in any one of the first aspect and the possible implementations of the first aspect, or implement the method in any one of the second aspect and the possible implementations of the second aspect.

According to a tenth aspect, a communication system is provided, including the foregoing at least one first apparatus and at least one second apparatus.

## BRIEF DESCRIPTION OF DRAWINGS

FIG. 1 is a diagram of a communication system according to an embodiment of this application;

FIG. 2 is another diagram of a communication system according to an embodiment of this application;

FIG. 3 is still another diagram of a communication system according to an embodiment of this application;

FIG. 4 is a schematic flowchart of a communication method according to an embodiment of this application;

FIG. 4A is a diagram of an information bit processing procedure according to an embodiment of this application;

FIG. 5 is a diagram of a sideband of a frequency domain resource according to an embodiment of this application;

FIG. 6 is a diagram of a bandwidth of a frequency domain resource according to an embodiment of this application;

FIG. 7, FIG. 8, and FIG. 9 are diagrams of a first frequency domain resource according to an embodiment of this application;

FIG. 10 is a diagram in which a first frequency band includes an even quantity of frequency bands according to an embodiment of this application;

FIG. 11 is a diagram in which a first frequency band includes an odd quantity of frequency bands according to an embodiment of this application;

FIG. 12 is another schematic flowchart of a communication method according to an embodiment of this application;

FIG. 13 is a diagram of a plurality of frequency bands in a first frequency band according to an embodiment of this application;

FIG. 14 and FIG. 15 are diagrams of fields included in indication information A according to an embodiment of this application;

FIG. 16 is a block diagram of an example of a communication apparatus according to an embodiment of this application; and

FIG. 17 is a diagram of a structure of a communication device according to an embodiment of this application.

## DESCRIPTION OF EMBODIMENTS

To make the objectives, technical solutions, and advantages of embodiments of this application clearer, the following clearly and completely describes the technical solutions in embodiments of this application with reference to the accompanying drawings in embodiments of this application. It is clear that, the described embodiments are merely a part rather than all of embodiments of this application. All other embodiments obtained by a person of ordinary skill in the art based on embodiments of this application without creative efforts shall fall within the protection scope of this application.

In the specification, the claims, and the accompanying drawings of embodiments of this application, the terms "first", "second", and the like are intended to distinguish between similar objects but do not necessarily indicate a specific order or sequence. It should be understood that the data termed in such a way are interchangeable in proper circumstances so that embodiments of this application described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

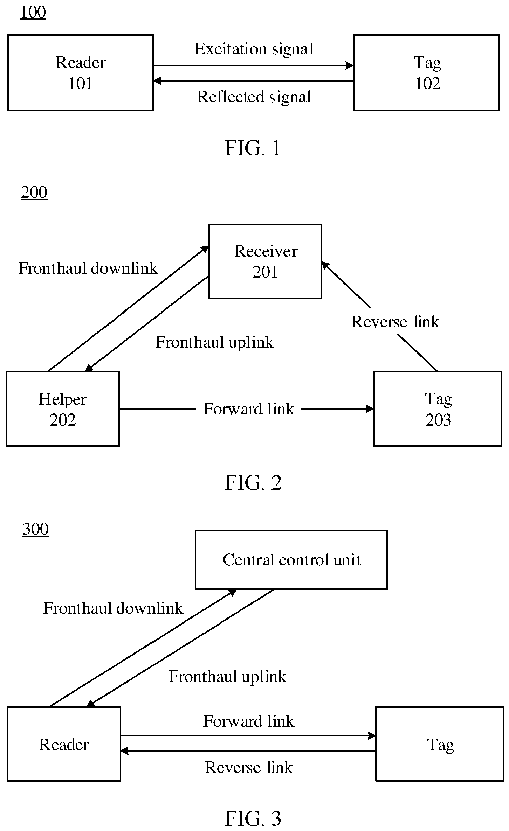

FIG. 1 is a diagram of a communication system 100 to which an embodiment of this application is applicable.

The communication system may include at least one second apparatus. The second apparatus may be a reader 101 shown in FIG. 1. The communication system may further include a plurality of first apparatuses. The first apparatus may be a tag 102 shown in FIG. 1. A radio frequency signal may be transferred between the first apparatus and the second apparatus, thereby implementing energy transfer and data exchange.

It should be understood that FIG. 1 is merely an example. The second apparatus provided in this embodiment of this application may be a reader, a readout apparatus, a scanner, a read head, a communicator, or a reader/writer (based on whether a tag can wirelessly rewrite data). Alternatively, the second apparatus may be an access network device in a mobile communication system, for example, may be a base station in a fourth generation, a fifth generation (5th generation, 5G), or a future mobile communication system. However, this application is not limited thereto.

The first apparatus provided in this embodiment of this application may be a tag, a terminal, a terminal device, or user equipment. The tag may be referred to as an electronic tag, a smart tag, a radio frequency tag, a transponder, a data carrier, or the like, and usually includes a coupling element and a chip. Each tag may have unique electronic code. In some scenarios, the tag may be attached to an object to identify the object. The tag 102 may also be referred to as a radio frequency tag, a transponder, or a data carrier. The reader 101 sends downlink signaling to the tag 102. Specifically, the reader 101 may send an excitation signal to the tag 102, where the excitation signal may carry the downlink signaling sent by the reader 101 to the tag 102. After receiving the downlink signaling sent by the reader 101, the tag 102 may use the excitation signal as a reflected carrier to send uplink signaling to the reader 101. For a passive tag, a part of energy of an excitation signal provided by a reader to the tag is used for internal processing such as encoding/decoding, modulation/demodulation of the tag, and the excitation signal is also used as a carrier to carry uplink signaling of the tag and reflect the uplink signaling of the tag to the reader. For a semi-passive tag, the tag includes an energy storage apparatus (for example, a battery), and internal processing such as encoding/decoding, modulation/demodulation may be performed depending on a function of the energy storage apparatus, but a reader still needs to send an excitation signal as a reflected carrier.

The reader may use a centralized architecture, for example, the reader shown in FIG. 1. In some implementations, the reader may use a separate architecture, for example, the reader may include a receiver (receiver) and a helper (helper). FIG. 2 is a diagram of a communication system 200 to which an embodiment of this application is applicable. As shown in FIG. 2, a reader includes a receiver 201 and a helper 202. A fronthaul link is between the receiver 201 and the helper 202. The fronthaul link includes a fronthaul downlink, used by the receiver 201 to send fronthaul downlink information or downlink data to the helper 202. The fronthaul link further includes a fronthaul uplink, used by the helper 202 to send fronthaul uplink information or uplink data to the receiver 201. A forward link (or referred to as a downlink) is between the helper 202 and a tag 203, and the helper 202 is responsible for sending downlink information or downlink data to the tag 203 through the forward link. A reverse link (or referred to as an uplink) is between the receiver 201 and the tag 203, and the receiver 201 is further responsible for receiving a reflected signal from the tag 203 through the reverse link.

For the fronthaul link between the helper and the receiver, a 5G mobile communication system NR technology or a 5G sidelink (sidelink) technology may be considered to be used for signal transmission. To be specific, the receiver generates information or data, and sends the information or data to the helper by using a 5G NR air interface technology as the fronthaul link, and the helper forwards the information or data on the forward link.

As shown in FIG. 3, when a reader uses a centralized architecture, in addition to transmitting an excitation signal and a reflected signal between the reader and a tag through a forward link and a reverse link, the reader further communicates with a central control unit (for example, a base station), and the central control unit may perform specific scheduling and control on resources and sending behaviors of the forward link used by the reader. A 5G NR technology or a 5G sidelink (sidelink) technology is considered to be used for communication between the central control unit and the reader.

Currently, to ensure coverage of uplink information (or uplink data) of a tag in an RFID technology, a bandwidth (that is, an uplink bandwidth) of the uplink information (or the uplink data) sent by the tag is narrow. For example, only a bandwidth resource of tens of kHz or dozens of kHz may be occupied. Only a part of uplink bandwidth resources are used, and problems of a waste of uplink bandwidth resources and a small communication capacity exist.

In addition, currently, a manner in which the RFID technology and a cellular technology (for example, a new radio (new radio, NR) and a long term evolution (long term evolution, LTE) technology) share a physical resource for separate communication is being studied. However, a communication bandwidth in the cellular technology may range from tens of MHz to hundreds of MHz, a minimum allocation unit of a frequency domain resource in the cellular technology is a physical resource block (physical resource block, PRB) whose bandwidth is 180 kHz, and a bandwidth of the minimum allocation unit is also far greater than tens of kHz of uplink information (or uplink data) in the RFID technology. To implement physical resource sharing between the RFID technology and the cellular technology, an effective technical solution is further needed to enable the reader and the tag to reach a consensus on the frequency domain resource used for communication.

According to the resource allocation method provided in this embodiment of this application, the second apparatus indicates an index value in an index value set to the first apparatus, so that the first apparatus can determine values of all parameters in a parameter group of a frequency domain resource corresponding to the index value, and determine, based on the parameter values of the parameter group, a frequency domain resource for sending uplink information (or uplink data). Therefore, the first apparatus and the second apparatus reach a consensus on an uplink frequency domain resource.

The following describes technical solutions of this application with reference to accompanying drawings.

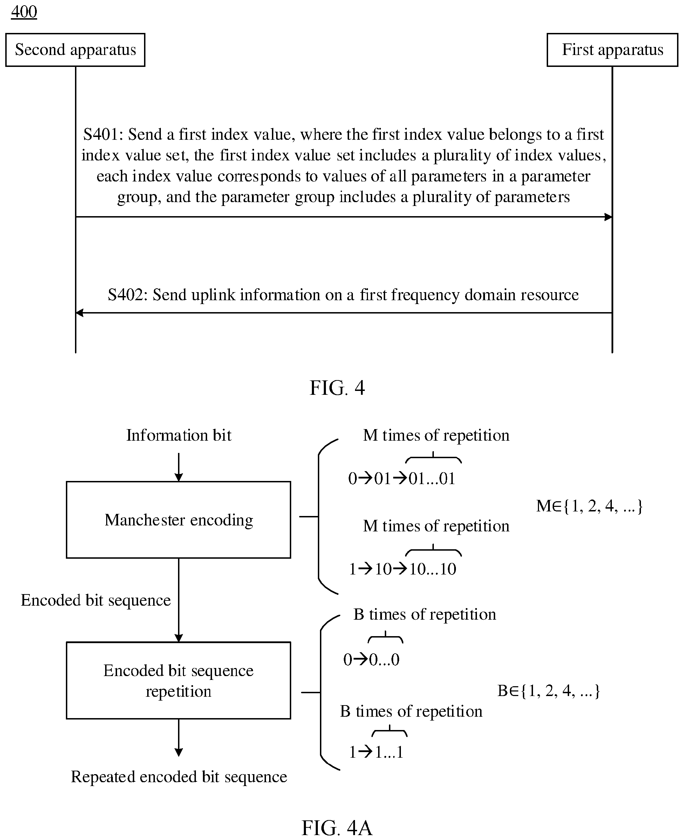

FIG. 4 is a schematic flowchart of a resource allocation method 400 according to an embodiment of this application. It should be noted that, in the embodiment shown in FIG. 4, a second apparatus may be a reader (or a reader/writer), or the second apparatus may be configured in the reader (or the reader/writer), such as a chip. A first apparatus may be a tag, or the second apparatus may be configured in the tag, such as a chip. However, this is not limited in this application.

S401: The second apparatus sends a first index value to the first apparatus, where the first index value belongs to a first index value set, the first index value set includes a plurality of index values, each index value corresponds to a combination of values of all parameters in a parameter group, and the parameter group includes a plurality of parameters.

The first index value corresponds to a combination of values of all parameters in a parameter group, and the combination of values of all parameters in a parameter group corresponding to the first index value corresponds to a first frequency domain resource.

Correspondingly, the first apparatus receives the first index value from the second apparatus.

Optionally, the parameter group includes one or more parameters of the frequency domain resource, namely, a first parameter, a second parameter, a third parameter, or a fourth parameter. Specifically, the first parameter to the fourth parameter are described below. That the index value corresponds to the combination of values of all parameters in a parameter group is described in the following.

For example, the parameter group includes the first parameter and the second parameter. That the index value in the first index value set corresponds to the combination of values of all parameters in a parameter group indicates that the index value corresponds to a combination of a value of the first parameter and a value of the second parameter. The first apparatus may determine, based on the index value, the value of the first parameter and the value of the second parameter that correspond to the index value. As described below, the first parameter may be a quantity B of repetition times of an encoded bit sequence, and the second parameter may be a quantity M of repetition times of uplink information. An index value in the first index value set may correspond to a combination of a value of the quantity B of repetition times of the bit sequence in the parameter group, for example, B=64, and a value of the quantity M of repetition times of the uplink information, for example, M=1. In other words, the combination of values of all parameters in a parameter group corresponding to the index value is B=64 and M=1. An index value in the first index value set may correspond to a combination of a value of the quantity B of repetition times of the bit sequence in the parameter group, for example, B=16, and a value of the quantity M of repetition times of the uplink information, for example, M=2. In other words, the combination of values of all parameters in a parameter group corresponding to the index value is B=16 and M=2.

The following first separately describes the four parameters, namely, the first parameter, the second parameter, the third parameter, and the fourth parameter.

(1) The first parameter is used for determining bit transmission duration in the uplink information.

Optionally, an encoded bit sequence is obtained by encoding an information bit in the uplink information, and the first parameter is a quantity B of repetition times of a bit in the encoded bit sequence. The bit transmission duration is transmission duration obtained by repeating a bit in the encoded bit sequence.

In this embodiment of this application, the information bit is an unencoded bit, and an encoded bit sequence is obtained by encoding an information bit. For example, as shown in FIG. 4A, the first apparatus may encode an information bit through Manchester encoding. If the information bit is 0, and a quantity M of Manchester encoding repetition times is 1, an encoded bit sequence obtained through Manchester encoding is 01. If the quantity M of Manchester encoding repetition times is greater than 1, encoding repetition is performed, M times, on 01 obtained by encoding the information bit 0, to obtain an encoded bit sequence. A value of M may include 1, 2, 4, or the like. For example, if M=4, encoding repetition is performed, four times, on 01 obtained by encoding the information bit 0, to obtain an encoded bit sequence 01010101. If the information bit is 1, and a quantity M of Manchester encoding repetition times is 1, an encoded bit sequence obtained through Manchester encoding is 10. If the quantity M of Manchester encoding repetition times is greater than 1, encoding repetition is performed, M times, on 10 obtained by encoding the information bit 1, to obtain an encoded bit sequence. For example, if M=2, encoding repetition is performed, twice, on 10 obtained by encoding the information bit 1, to obtain an encoded bit sequence 1010. The first apparatus may adjust a bandwidth of the encoded bit sequence by adjusting the quantity of repetition times of each bit in the encoded bit sequence. If the quantity B of repetition times of the encoded bit sequence is greater than 1, the first apparatus repeats each bit in the encoded bit sequence B times, to obtain a repeated encoded bit sequence. For example, if the encoded bit sequence is 0101, and the quantity B of repetition times of the encoded bit sequence is 2, the first apparatus repeats each bit sequence in the encoded bit sequence B times, to obtain a repeated encoded bit sequence 00110011.

Unit transmission duration of an encoded bit sequence is first duration (denoted as Tu). The first duration is transmission duration of an encoded bit sequence obtained by encoding an information bit when the quantity of repetition times of the encoded information bit is 1. Alternatively, the first duration is minimum transmission duration of an encoded bit sequence obtained by encoding an information bit. If the quantity of repetition times of each bit in the encoded bit sequence is B, transmission duration of the encoded bit sequence is Tu*B. For example, for an information bit 0, an encoded bit sequence obtained through Manchester encoding is 01 (that is, a quantity M of encoding repetition times is 1), and if unit transmission duration Tu of the encoded bit sequence is 6.25 $\mu$s, unit transmission duration of each bit in the encoded bit sequence is Tu/2=3.125 $\mu$s. If B=4, each bit in the encoded bit sequence is repeated four times, and 00001111 is obtained through repetition. Because each bit is repeated four times, transmission duration of each bit in the encoded bit sequence is four times the unit transmission duration of each bit, that is, 3.125*4=12.5 $\mu$s.

Transmission duration of an encoded bit sequence in the uplink information is related to a first frequency of a frequency domain resource that carries the uplink information.

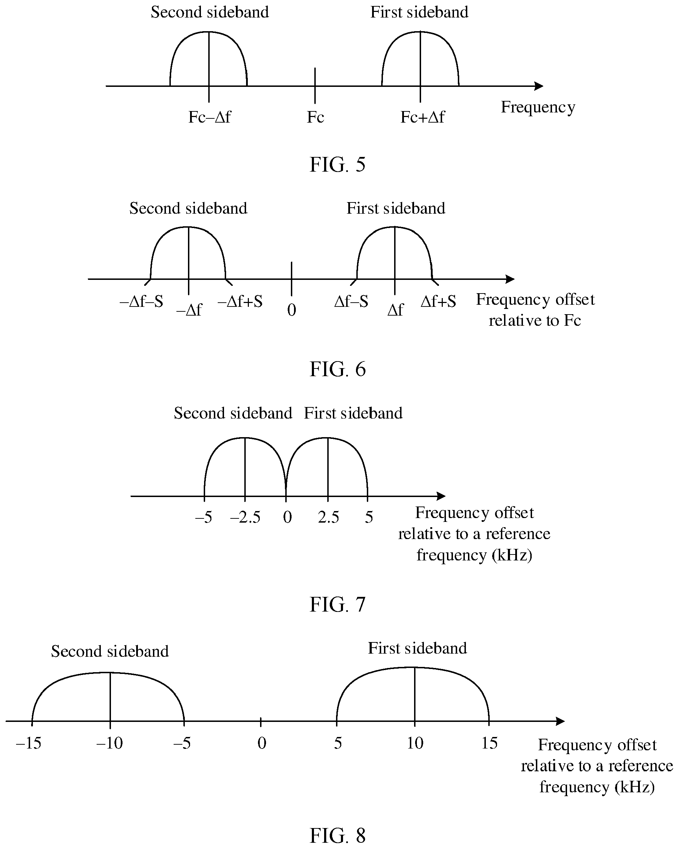

In an implementation, the frequency domain resource of the uplink information may be a single-sideband frequency domain resource. In this case, the first frequency is a center frequency of the frequency domain resource, and an offset of a frequency of the center frequency relative to a carrier frequency Fc is $\Delta$f or -$\Delta$f. For example, the frequency domain resource of the uplink information may be a first sideband shown in FIG. 5, and the first frequency is a center frequency Fc+$\Delta$f of the first sideband; or the frequency domain resource of the uplink information may be a second sideband shown in FIG. 5, and the first frequency is a center frequency Fc-$\Delta$f of the second sideband. In another implementation, the frequency domain resource of the uplink information may be a double-sideband frequency domain resource. For example, if the frequency domain resource of the uplink information may include a first sideband and a second sideband shown in FIG. 5, the first frequency includes a center frequency Fc+$\Delta$f of the first sideband and a center frequency Fc-$\Delta$f of the second sideband.

The first frequency of the frequency domain resource that carries the uplink information may be determined based on the transmission duration of the encoded bit sequence in the uplink information. The first apparatus may obtain, through calculation, the transmission duration of the encoded bit sequence based on the unit transmission duration (denoted as the first duration) of the encoded bit sequence and the quantity of repetition times of the encoded bit sequence.

For example, unit transmission duration of an encoded bit sequence is first duration (denoted as Tu). If each bit in an encoded bit sequence is repeated B times in sequence, transmission duration of the encoded bit sequence is Tu*B, and an offset of a first frequency of a frequency domain resource that carries the uplink information relative to a reference frequency is $\Delta$f. The reference frequency may be a carrier frequency Fc, and $\Delta$f is inversely proportional to the transmission duration of the encoded bit sequence. For example,

$$\Delta f=1/(Tu*B).$$

Optionally, the first duration Tu may be preconfigured or indicated by the second apparatus. The unit transmission duration Tu of the encoded bit sequence determines a bandwidth of a maximum frequency domain resource (denoted as a first frequency band) for communication of the first apparatus, that is, a maximum communication frequency band of the first apparatus. The bandwidth of the maximum frequency domain resource is 1/Tu.

For example, an encoded bit sequence is obtained by encoding an information bit in the uplink information. The uplink information includes a plurality of encoded bit sequences obtained by encoding a plurality of information bits, and each bit in each encoded bit sequence is repeated B times in sequence. In this case, the offset between the first frequency of the frequency domain bandwidth of the uplink information and the carrier frequency Fc is 1/(Tu*B).

(2) The second parameter indicates a quantity M of repetition times of the uplink information.

The quantity M of repetition times of the uplink information may be a quantity of repetition times of the information bit in the uplink information, or the quantity of repetition times of the uplink information may be a quantity of repetition times of an encoded information bit.

Alternatively, the quantity M of repetition times is a quantity of encoding repetition times. The first apparatus may repeat the information bit M times before encoding, and obtain an encoded bit sequence by encoding the information bit that is repeated M times. Alternatively, the first apparatus may repeat an encoded information bit M times obtained by encoding the information bit, to obtain the encoded bit sequence. It should be noted that repeating the information bit M times or repeating the encoded information bit M times may also be considered as a part of an encoding step. This is not limited in this application.

For example, the second parameter is the quantity M of repetition times of the information bit in the uplink information, and the first apparatus encodes the information bit through Manchester encoding. During Manchester encoding, if encoding repetition is not performed on the information bit, an information bit is 0, and 01 is obtained through Manchester encoding. During Manchester encoding, if encoding repetition is performed on the information bit twice (that is, M=2), an information bit is 0, and 00 is obtained by repeating twice. The first apparatus performs Manchester encoding to obtain an encoded bit sequence 0101. The uplink information may include N information bits, and M*N bits are obtained by repeating M times. The first apparatus performs Manchester encoding on the M*N bits to obtain an encoded bit sequence corresponding to the N information bits, including 2M*N bits.

For another example, the second parameter is the quantity of repetition times of the encoded information bit (or referred to as the quantity of encoding repetition times) in the uplink information. The first apparatus encodes the information bit through Manchester encoding. If the information bit is not repeated, an information bit is 0, and 01 is obtained through Manchester encoding. If the information bit is repeated after being encoded through Manchester encoding, for example, a quantity of repetition times is 2, that is, M=2, 01 obtained through encoding is repeated twice, to obtain an encoded bit sequence 0101. The uplink information may include N information bits. The first apparatus performs Manchester encoding on the N information bits to obtain 2N bits, and repeats the 2N bits M times to obtain an encoded bit sequence corresponding to the N information bits, including 2N*M bits.

The quantity M of encoding repetition times, the quantity B of repetition times of the encoded bit sequence, and the first duration Tu determine a data rate S of the uplink information, that is, a quantity of information bits (that is, unencoded bits) transmitted in a unit time. For example,

$$S=1/(Tu*B*M),$$

that is, $S=\Delta f/M$.

The data rate S of the uplink information may represent a transmission bandwidth of the uplink information. FIG. 6 shows start frequencies and end frequencies of two sidebands shown in FIG. 5. In FIG. 6, a coordinate value is a frequency offset (that is, a frequency offset) of a frequency relative to a carrier frequency Fc. If a quantity of encoding repetition times is M, a bandwidth of the first sideband is 2S, frequency offsets of a start frequency and an end frequency relative to Fc are respectively $\Delta f$-S and $\Delta f$+S, a bandwidth of the second sideband is 2S, and frequency offsets of a start frequency and an end frequency relative to Fc are respectively -$\Delta f$-S and -$\Delta f$+S. Therefore, if the frequency domain resource of the uplink information is a double-sideband frequency domain resource, the frequency resource of the uplink information includes the first sideband and the second sideband, and the transmission bandwidth is 4S. If the frequency domain resource of the uplink information is a single-sideband frequency domain resource, the frequency domain resource of the uplink information may be the first sideband or the second sideband, and the transmission bandwidth is 2S.

In conclusion, the first apparatus encodes the information bit based on the quantity M of encoding repetition times to obtain the encoded bit sequence, and then determines, based on the quantity B of repetition times of each bit in the encoded bit sequence and the first duration Tu, the transmission duration of each bit, and then sends the uplink information that includes the encoded bit sequence. Therefore, if the frequency domain resource occupied, in frequency domain, by the uplink information sent based on M, B, and Tu includes two sidebands, center frequencies are respectively Fc+$\Delta f$ and Fc-$\Delta f$; or if the frequency domain resource occupied, in frequency domain, by the uplink information sent based on M, B, and Tu includes one sideband, the center frequency is Fc+$\Delta f$ or Fc-$\Delta f$, and a bandwidth of each sideband of the frequency domain resource is twice the data rate, that is, 2S. In other words, based on the quantity M of encoding repetition times of the uplink information, the quantity B of repetition times of the encoded bit sequence, and the first duration Tu, it may be determined that the frequency offset of the center frequency of the frequency domain resource of the uplink information relative to the carrier frequency Fc is 1/(Tu*B), and the bandwidth of each sideband of the frequency domain resource of the uplink information is twice the data rate S, where S=1/(Tu*B*M).

In an example, the parameter group may include the first parameter and the second parameter. The first apparatus may determine an offset $\Delta f$ of a center frequency of the first frequency domain resource relative to a reference frequency based on a value B of the first parameter of the first frequency domain resource and first duration Tu. That is,

$$\Delta f=1/(Tu*B).$$

The first apparatus determines a transmission rate S of the uplink information based on the value of the first parameter of the first frequency domain resource and a value of the second parameter of the first frequency domain resource, and the first duration.

$$S=1/(Tu*B*M), \text{ or } S=\Delta f/M.$$

Alternatively, the first apparatus may determine a frequency domain bandwidth of the first frequency domain resource based on the value of the first parameter of the first frequency domain resource and a value of the second parameter of the first frequency domain resource, and the first duration. If the first frequency domain resource is a double-sideband frequency domain resource, a bandwidth of each sideband is twice the data rate, that is, 2S, and the frequency domain bandwidth of the first frequency domain resource is 4S. If the first frequency domain resource is a single-sideband frequency domain resource, the frequency band of the first frequency domain resource is 2S.

(3) The third parameter indicates the first frequency that carries the frequency domain resource.

Optionally, the third parameter is an offset of the first frequency of the frequency domain resource relative to a reference frequency.

For example, the first frequency of the frequency domain resource may be a start frequency, an end frequency, or a center frequency of a sideband in the frequency domain resource. The reference frequency may be a preset frequency. For example, the reference frequency may be a carrier frequency, or a frequency obtained by shifting the carrier frequency. However, this application is not limited thereto.

According to the foregoing described relationship between the third parameter $\Delta f$ and the quantity B of repetition times of the encoded bit sequence (that is, line code), the first apparatus may determine a quantity B of repetition times of the line code based on the third parameter $\Delta f$ and the first duration Tu, that is, the value B of the first parameter satisfies:

$$B=1/(Tu*\Delta f).$$

(4) The fourth parameter indicates a frequency domain bandwidth of the frequency domain resource or the data rate S.

For example, the fourth parameter may indicate a bandwidth 2S of each sideband of the frequency domain resource, or indicate a total bandwidth 4S of two sidebands.

In an example, the parameter group of the frequency domain resource may include a first parameter and a second parameter. For example, the first parameter is a quantity B of repetition times of line code, and the second parameter is a quantity M of encoding repetition times. The first apparatus may repeat an information bit M times based on the value M of the second parameter, to obtain, through encoding, an encoded bit sequence, or repeat an encoded information bit M times, to obtain an encoded bit sequence, where the encoded bit sequence is the line code. When the first apparatus determines, based on the quantity B of repetition times of the line code and the first duration Tu, that transmission duration of each line code in the uplink information is Tu*B, an offset between a center frequency of the frequency domain resource of the uplink information and a frequency of a carrier frequency Fc is $\Delta f=1/(Tu*B)$, and a transmission rate of the uplink information is $S=1/(Tu*B*M)$.

The first apparatus may determine the second parameter based on the fourth parameter and the first parameter, that is, the first apparatus may determine the quantity M of repetition times of the uplink information based on the fourth parameter and the quantity B of repetition times of the line code. For example, if the fourth parameter is the data rate S, the quantity M of repetition times of the uplink information satisfies:

$$M=1/(Tu*B*S) \text{ or } M=\Delta f/S.$$

For example, the first index value set is a set of index values shown in Table 1, and the first index value set may include index values 0, 1, 2 to 14, that is, a total of 15 index values. Each index value corresponds to a value of the quantity B of repetition times of the line code and a value of the quantity M of encoding repetition times. The first index value sent by the second apparatus to the first apparatus is an index value in the first index value set, and the first apparatus determines a first frequency domain resource based on values of all parameters in a parameter group corresponding to the first index value.

**Table 1**

| Index value | B | M |
|---|---|---|
| 0 | 64 | 1 |
| 1 | 32 | 1 |
| 2 | 32 | 2 |
| 3 | 16 | 1 |
| 4 | 16 | 2 |
| 5 | 16 | 4 |
| 6 | 8 | 1 |
| 7 | 8 | 2 |
| 8 | 8 | 4 |
| 9 | 8 | 8 |
| 10 | 4 | 1 |
| 11 | 4 | 2 |

(continued)

| Index value | B | M |
|---|---|---|
| 12 | 4 | 4 |
| 13 | 4 | 8 |
| 14 | 4 | 16 |

For example, the first index value sent by the second apparatus to the first apparatus is an index value 0 shown in Table 1, and the index value 0 corresponds to B=64 and M=1. The first apparatus may determine, based on B, M, and Tu, the first frequency domain resource for sending the uplink information. If Tu=6.25 $\mu$s is preconfigured, an offset of a first frequency of the first frequency domain resource relative to a reference frequency is $\Delta$f=1/(Tu*B)=2.5 kHz, and a data rate is S=$\Delta$f/M=2.5 kHz. If the first frequency domain resource is a single-sideband frequency domain resource, a bandwidth of the first frequency domain resource is 2S=5 kHz. If the first frequency domain resource is a double-sideband frequency domain resource, a bandwidth of the first frequency domain resource is 4S=10 kHz, and a bandwidth of each sideband of the first frequency domain resource is 2S, that is, 5 kHz, as shown in FIG. 7.

For another example, the first index value sent by the second apparatus to the first apparatus is an index value 4 shown in Table 1, and the index value 4 corresponds to B=16 and M=2. The first apparatus may determine, based on B, M, and Tu, the first frequency domain resource for sending the uplink information. If Tu=6.25 $\mu$s is preconfigured, an offset of a first frequency of the first frequency domain resource relative to a reference frequency (for example, a carrier frequency or a frequency obtained by shifting the carrier frequency) is $\Delta$f=1/(Tu*B)=10 kHz, and a data rate is S=$\Delta$f/M=5 kHz. If the first frequency domain resource is a single-sideband frequency domain resource, a bandwidth of the first frequency domain resource is 2S=10 kHz. If the first frequency domain resource is a double-sideband frequency domain resource, a bandwidth of the first frequency domain resource is 4S=20 kHz, and a bandwidth of each sideband of the first frequency domain resource is 2S, that is, 10 kHz, as shown in FIG. 8.

In another example, the parameter group of the frequency domain resource may include a third parameter and a fourth parameter. The third parameter is an offset $\Delta$f of a first frequency of the frequency domain resource of the uplink information relative to a reference frequency. The fourth parameter may be a data rate S. The first apparatus may determine a quantity B of repetition times of line code based on the frequency offset $\Delta$f of the frequency and first duration, and then determine a quantity M of repetition times of an encoded bit based on the data rate S and the quantity B of repetition times of the line code, that is, M=1/(Tu*B*S). The first apparatus sends the uplink information based on the quantity M of encoding repetition times, the quantity B of repetition times of the line code, and the first duration. The offset between the first frequency of the frequency domain resource of the uplink information and the reference frequency is $\Delta$f, and the data rate is S. If the frequency domain resource of the uplink information is a double-sideband, a bandwidth of the frequency domain resource of the uplink information is 4S. If the frequency domain resource of the uplink information is a single-sideband, a bandwidth of the frequency domain resource of the uplink information is 2S.

For example, a first index set is a set of index values shown in Table 2, and the first index value set may include index values 0, 1, 2 to 14, that is, a total of 15 index values. Each index value corresponds to a value of the offset $\Delta$f of the first frequency of the frequency domain resource of the uplink information relative to the reference frequency and a value of the data rate S. The first apparatus determines a first frequency domain resource based on values of all parameters in a parameter group corresponding to the first index value.

**Table 2**

| Index value | $\Delta$f | S |
|---|---|---|
| 0 | 2.5 kHz | 2.5 kHz |
| 1 | 5 kHz | 5 kHz |
| 2 | 5 kHz | 2.5 kHz |
| 3 | 10 kHz | 10 kHz |
| 4 | 10 kHz | 5 kHz |
| 5 | 10 kHz | 2.5 kHz |
| 6 | 20 kHz | 20 kHz |
| 7 | 20 kHz | 10 kHz |

(continued)

| Index value | Δf | S |
|---|---|---|
| 8 | 20 kHz | 5 kHz |
| 9 | 20 kHz | 2.5 kHz |
| 10 | 40 kHz | 40 kHz |
| 11 | 40 kHz | 20 kHz |
| 12 | 40 kHz | 10 kHz |
| 13 | 40 kHz | 5 kHz |
| 14 | 40 kHz | 2.5 kHz |

For example, the first index value sent by the second apparatus to the first apparatus is an index value 0 shown in Table 2, and a value of Δf corresponding to the index value 0 is 2.5 kHz. To be specific, an offset of a first frequency of the frequency domain resource of the uplink information relative to a reference frequency is 2.5 kHz, and a data rate S of the uplink information is 2.5 kHz. The first apparatus may determine the first frequency domain resource based on Δf and S. If the first frequency domain resource is a single-sideband frequency domain resource, a bandwidth of the first frequency domain resource is 2S=5 kHz. If the first frequency domain resource is a double-sideband frequency domain resource, a bandwidth of the first frequency domain resource is 4S=10 kHz, and a bandwidth of each sideband of the first frequency domain resource is 2S, that is, 5 kHz, as shown in FIG. 7. If Tu=6.25 μs, after obtaining Δf based on the index value 0, the first apparatus calculates, based on Δf and Tu, that a quantity B of repetition times of line code is 1/(Tu*Δf)=16, and then calculates, based on Δf and the data rate S, that a quantity M of encoding repetition times is Δf/S=2. In addition, encoding repetition is performed on an information bit in the uplink information twice to obtain an encoded bit sequence, and then each encoded bit sequence in the uplink information is transmitted based on transmission duration Tu*B=100 μs. In other words, each encoded bit sequence is repeatedly transmitted 16 times based on the transmission duration Tu=6.25 μs, so that a frequency domain resource of the sent uplink information is the first frequency domain resource, the data rate of the uplink information is 2.5 kHz, a bandwidth of a single-sideband of the first frequency domain resource is 5 kHz, and a bandwidth of a double-sideband is 10 kHz. An offset of a center frequency of each sideband relative to a carrier frequency is 2.5 kHz.

The foregoing two examples are described by using an example in which the parameter group includes the first parameter and the second parameter, or the parameter group includes the third parameter and the fourth parameter. However, this application is not limited thereto. The parameter group may include a second parameter and a fourth parameter, for example, a quantity M of encoding repetition times and a data rate S. The first apparatus may calculate a quantity B of repetition times of line code based on S, M, and Tu, so that a frequency domain resource of the uplink information sent by the first apparatus based on B and M is the first frequency domain resource. Alternatively, the parameter group may include a first parameter and a third parameter, for example, a quantity B of repetition times of line code and an offset Δf of a single-sideband center frequency of the first frequency domain resource relative to a carrier frequency. The first apparatus may obtain, through calculation, a quantity M of encoding repetition times based on Δf, B, and Tu, so that a frequency domain resource of the uplink information sent by the first apparatus based on B and M is the first frequency domain resource.

For example, the first index value set may be a set of index values shown in Table 2A, and the first index value set may include index values 0, 1, 2 to 14, that is, a total of 15 index values. Each index value corresponds to a value of the offset Δf of the first frequency of the frequency domain resource of the uplink information relative to the reference frequency and a value of a bandwidth 2S of each sideband of the frequency domain resource. The first apparatus determines a first frequency domain resource based on values of all parameters in a parameter group corresponding to the first index value. Optionally, the first frequency domain resource may be a single-sideband resource, and a bandwidth is 2S. Alternatively, the first apparatus may receive indication information from the second apparatus, where the indication information indicates whether the first frequency domain resource is a single-sideband frequency domain resource or a double-sideband frequency domain resource. A frequency domain bandwidth of each sideband in the first frequency domain resource is a value of 2S in Table 2A corresponding to the first index value. The first apparatus may obtain, through calculation, a quantity M of encoding repetition times and a quantity B of repetition times of each bit in an encoded bit sequence based on Δf, 2S, and Tu, so that a frequency domain resource occupied, in frequency domain, by the uplink information sent by the first apparatus based on B and M is the first frequency domain resource.

**Table 2A**

| Index value | Δf | 2S |
|---|---|---|
| 0 | 2.5 kHz | 5 kHz |
| 1 | 5 kHz | 10 kHz |
| 2 | 5 kHz | 5 kHz |
| 3 | 10 kHz | 20 kHz |
| 4 | 10 kHz | 10 kHz |
| 5 | 10 kHz | 5 kHz |
| 6 | 20 kHz | 40 kHz |
| 7 | 20 kHz | 20 kHz |
| 8 | 20 kHz | 10 kHz |
| 9 | 20 kHz | 5 kHz |
| 10 | 40 kHz | 80 kHz |
| 11 | 40 kHz | 40 kHz |
| 12 | 40 kHz | 20 kHz |
| 13 | 40 kHz | 10 kHz |
| 14 | 40 kHz | 5 kHz |

For example, the first index value set may be a set of index values shown in Table 2B, and the first index value set may include index values 0, 1, 2 to 14, that is, a total of 15 index values. Each index value corresponds to a value of the offset $\Delta f$ of the first frequency of the frequency domain resource of the uplink information relative to the reference frequency and a value of a total bandwidth 4S of the frequency domain resource. The first apparatus determines a first frequency domain resource based on values of all parameters in a parameter group corresponding to the first index value. Optionally, the first frequency domain resource may be a double-sideband resource, and a bandwidth is 4S. Alternatively, the first apparatus may receive indication information from the second apparatus, where the indication information indicates whether the first frequency domain resource is a single-sideband frequency domain resource or a double-sideband frequency domain resource. Frequency domain bandwidths of all sidebands in the first frequency domain resource are equal, and may be determined based on a value of 4S in Table 2B corresponding to the first index value. A frequency domain bandwidth of each sideband is a half of the value of 4S, that is, 4S/2=2S. The first apparatus may obtain, through calculation, a quantity M of encoding repetition times and a quantity B of repetition times of each bit in an encoded bit sequence based on $\Delta f$, 4S, and Tu, so that a frequency domain resource occupied, in frequency domain, by the uplink information sent by the first apparatus based on B and M is the first frequency domain resource.

**Table 2B**

| Index value | Δf | 4S |
|---|---|---|
| 0 | 2.5 kHz | 10 kHz |
| 1 | 5 kHz | 20 kHz |
| 2 | 5 kHz | 10 kHz |
| 3 | 10 kHz | 40 kHz |
| 4 | 10 kHz | 20 kHz |
| 5 | 10 kHz | 10 kHz |
| 6 | 20 kHz | 80 kHz |
| 7 | 20 kHz | 40 kHz |
| 8 | 20 kHz | 20 kHz |
| 9 | 20 kHz | 10 kHz |

(continued)

| Index value | Δf | 4S |
|---|---|---|
| 10 | 40 kHz | 160 kHz |
| 11 | 40 kHz | 80 kHz |
| 12 | 40 kHz | 40 kHz |
| 13 | 40 kHz | 20 kHz |
| 14 | 40 kHz | 10 kHz |

In this embodiment of this application, the first duration may be preconfigured, or the first duration is obtained from the second apparatus, or the parameter group further includes the first duration. When the parameter group includes the first duration, the first index value further corresponds to a value of the first duration. In other words, there may be one column more in Table 1 and Table 2, and the column includes a value of first duration corresponding to each index value.

In Table 1 and Table 2, if Tu is 6.25 μs, a bandwidth of a maximum frequency domain resource is 1/Tu=160 kHz. For example, a frequency domain resource of a maximum double-sideband may be indicated based on an index value 10 in Table 2, and each sideband is 80 kHz. Duration Tu is not limited in this application. Alternatively, the first duration Tu may be 5.56 μs, and the bandwidth of the maximum frequency domain resource is 1/Tu=180 kHz. When Tu is 5.56 μs, a corresponding first index value set may be a set of index values shown in Table 3.

**Table 3**

| Index value | Δf | S |
|---|---|---|
| 0 | 2.8125 kHz | 2.8125 kHz |
| 1 | 5.625 kHz | 5.625 kHz |
| 2 | 5.625 kHz | 2.8125 kHz |
| 3 | 11.25 kHz | 11.25 kHz |
| 4 | 11.25 kHz | 5.625 kHz |
| 5 | 11.25 kHz | 2.8125 kHz |
| 6 | 22.5 kHz | 22.5 kHz |
| 7 | 22.5 kHz | 11.25 kHz |
| 8 | 22.5 kHz | 5.625 kHz |
| 9 | 22.5 kHz | 2.8125 kHz |
| 10 | 45 kHz | 45 kHz |
| 11 | 45 kHz | 22.5 kHz |
| 12 | 45 kHz | 11.25 kHz |
| 13 | 45 kHz | 5.625 kHz |
| 14 | 45 kHz | 2.8125 kHz |

In an example, the second apparatus may send a value of the first duration to the first apparatus. After obtaining the value of the first duration from the second apparatus, the first apparatus may determine, based on the first duration, an index value set corresponding to the value of the first duration as the first index value set. An index value set corresponding to each value of the first duration may be preconfigured. For example, if the second apparatus indicates that Tu is 6.25 μs, the first apparatus may determine that the first index value set is the set of index values in Table 2. For example, if the second apparatus indicates that Tu is 5.56 μs, the first apparatus may determine that the first index value set is the set of index values in Table 3. However, this application is not limited thereto.

In another example, the second apparatus may send second information to the first apparatus, where the second information indicates a first bandwidth, the first bandwidth is a bandwidth of a first frequency band, and the first frequency band is a maximum communication frequency band of the first apparatus. The first apparatus may determine the first duration based on the bandwidth of the first frequency band (that is, the first bandwidth). For example, if the second information may indicate that the bandwidth of the first frequency band is 160 kHz, the first apparatus may determine that the value of the first duration is 6.25 μs. For another example, if the second information may indicate that the bandwidth of the first frequency band is 180 kHz, the first apparatus may determine that the value of the first duration is 5.56 μs. However, this application is not limited thereto.

Optionally, the first apparatus determines, based on the first bandwidth and a first correspondence, the first index value set corresponding to the first frequency band, where a plurality of bandwidths in the first correspondence one-to-one correspond to a plurality of index value sets, the plurality of bandwidths include the first bandwidth, and the first index value set is an index value set corresponding to the first bandwidth in the plurality of index value sets.

For example, the first correspondence includes two bandwidths, for example, 180 kHz and 160 kHz. The two bandwidths respectively one-to-one correspond to the index value sets in Table 2 and Table 3. For example, an index value set corresponding to 180 kHz includes the index values in Table 2, and an index value set corresponding to 160 kHz includes the index values in Table 3. The second apparatus may send second information to the first apparatus, to indicate that the bandwidth of the first frequency band is 180 kHz. After receiving the second information, the first apparatus may determine that the first index value set includes the index values in Table 2. Then, the second apparatus sends the first index value to the first apparatus. After receiving the first index value, the first apparatus determines the first frequency domain resource based on values of all parameters in a parameter group corresponding to the first index value in Table 2. However, this application is not limited thereto.

Before S401, the second apparatus may send second information to the first apparatus to indicate a bandwidth of the first frequency band (that is, a first bandwidth). After receiving the second information, the first apparatus determines that the first bandwidth is a maximum communication frequency band of the first apparatus. In addition, an index value set corresponding to the first frequency band in the first correspondence may be determined as the first index value set based on the first bandwidth and the first correspondence.

An uplink frequency band of a reflective communication (for example, RFID) technology may include a plurality of candidate bandwidths, and a bandwidth of a frequency band used by the first apparatus to send the uplink information may be one of the plurality of candidate bandwidths. For example, when the reflective communication (for example, RFID) technology shares a physical resource with a cellular technology, the reflective communication technology may perform communication based on a minimum allocation unit, namely, a frequency domain resource in 180 kHz of one RB, of the cellular technology, that is, a bandwidth of the maximum communication frequency band of the first apparatus is 180 kHz or less. The first apparatus and the second apparatus may preconfigure the first index value set and values of all parameters in a parameter group corresponding to each index value. The second apparatus may send the first index value to the first apparatus, and notify the first apparatus of a specific part of resource that is in the maximum communication frequency band and that is used to transmit the uplink information. However, this application is not limited thereto. The reflective communication technology may also use a plurality of resource blocks (resource block, RB) in the cellular technology for communication, or use a larger bandwidth resource in the cellular technology for communication. According to this embodiment of this application, the first apparatus may determine the first index value set based on the first bandwidth of the first frequency band and the first correspondence.

In an example, the first apparatus and the second apparatus may preconfigure a correspondence between an index value and parameter values in a parameter group shown in Table 4, or the second apparatus preconfigures a correspondence shown in Table 4, and the first apparatus obtains the correspondence shown in Table 4 from the second apparatus. The parameter group includes a first parameter and a second parameter. In the first correspondence between the plurality of bandwidths and the plurality of index value sets, a value of each bandwidth of the first frequency band corresponds to some or all index value sets in index values shown in Table 4. For example, in the first correspondence, an index value set corresponding to a first bandwidth 180 kHz includes an index value 0 to an index value 14 and an index value 18 to an index value 20; an index value set corresponding to a first bandwidth 360 kHz includes an index value 0 to an index value 20 and an index value 24 to an index value 27; and an index value set corresponding to a first bandwidth 540 kHz includes an index value 0 to an index value 20 and an index value 22 to an index value 27. An index value set corresponding to a first bandwidth 720 kHz includes all index values shown in Table 4.

**Table 4**

| Index value | B | M | Index value | B | M |
|---|---|---|---|---|---|
| 0 | 64 | 1 | 14 | 4 | 16 |
| 1 | 32 | 1 | 15 | 2 | 1 |
| 2 | 32 | 2 | 16 | 2 | 2 |
| 3 | 16 | 1 | 17 | 2 | 4 |

(continued)

| Index value | B | M | Index value | B | M |
|---|---|---|---|---|---|
| 4 | 16 | 2 | 18 | 2 | 8 |
| 5 | 16 | 4 | 19 | 2 | 16 |
| 6 | 8 | 1 | 20 | 2 | 32 |
| 7 | 8 | 2 | 21 | 1 | 1 |
| 8 | 8 | 4 | 22 | 1 | 2 |
| 9 | 8 | 8 | 23 | 1 | 4 |
| 10 | 4 | 1 | 24 | 1 | 8 |
| 11 | 4 | 2 | 25 | 1 | 16 |
| 12 | 4 | 4 | 26 | 1 | 32 |
| 13 | 4 | 8 | 27 | 1 | 64 |

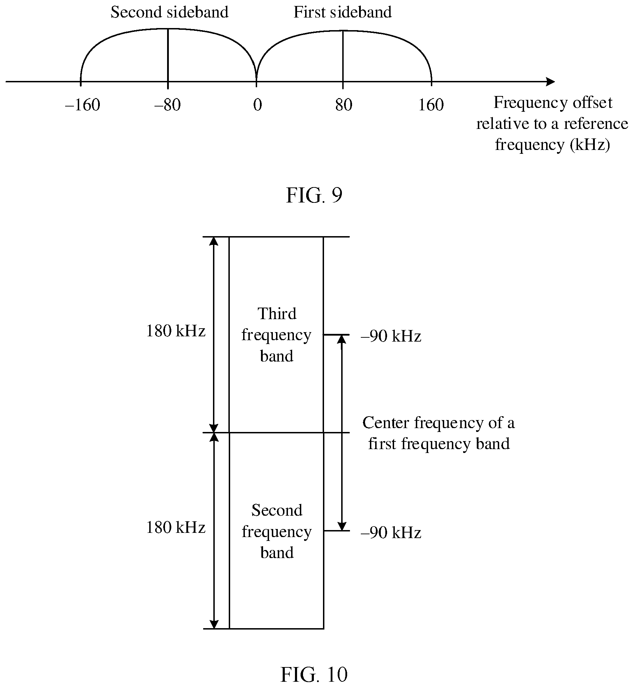

The second apparatus may send second information to the first apparatus to indicate the first bandwidth, for example, indicate 360 kHz. After the first apparatus determines, based on the second information, that the bandwidth of the first frequency band is 360 kHz, the first apparatus determines, based on the first correspondence, that an index value set corresponding to 360 kHz in the first correspondence is the first index value set, that is, the first index value set includes the index value 0 to the index value 20 and the index value 22 to the index value 27. Then, the second apparatus sends the first index value in the first index set to the first apparatus, to notify the first apparatus of the first frequency domain resource used by the first apparatus to send the uplink information in the first frequency band of 360 kHz. For example, if a value of M in the parameter group corresponding to the first index value is 1, a value of B is 2, and Tu=6.25 $\mu$s, $\Delta$f=80 kHz may be obtained through calculation. For example, the first frequency domain resource is a double-sideband frequency domain resource. As shown in FIG. 9, the first frequency domain resource includes two sidebands whose center frequencies are $\Delta$f=80 kHz and $\Delta$f=-80 kHz and whose bandwidths are both 160 kHz.

In another example, the first apparatus and the second apparatus may preconfigure a correspondence between an index value and parameter values in a parameter group shown in Table 5, or the second apparatus preconfigures a correspondence shown in Table 5, and the first apparatus obtains the correspondence shown in Table 5 from the second apparatus. The parameter group includes a third parameter and a fourth parameter. In the first correspondence between the plurality of bandwidths and the plurality of index value sets, a value of each bandwidth of the first frequency band corresponds to some or all index value sets in index values shown in Table 5. For example, in the first correspondence, an index value set corresponding to a first bandwidth 180 kHz includes an index value 0 to an index value 14 and an index value 18 to an index value 20; an index value set corresponding to a first bandwidth 360 kHz includes an index value 0 to an index value 20 and an index value 24 to an index value 27; and an index value set corresponding to a first bandwidth 540 kHz includes an index value 0 to an index value 20 and an index value 22 to an index value 27. An index value set corresponding to a first bandwidth 720 kHz includes all index values shown in Table 4.

**Table 5**

| Index value | $\Delta$f | S | Index value | $\Delta$f | S |
|---|---|---|---|---|---|
| 0 | 2.5 kHz | 2.5 kHz | 14 | 40 kHz | 2.5 kHz |
| 1 | 5 kHz | 5 kHz | 15 | 80 kHz | 80 kHz |
| 2 | 5 kHz | 2.5 kHz | 16 | 80 kHz | 40 kHz |
| 3 | 10 kHz | 10 kHz | 17 | 80 kHz | 20 kHz |
| 4 | 10 kHz | 5 kHz | 18 | 80 kHz | 10 kHz |
| 5 | 10 kHz | 2.5 kHz | 19 | 80 kHz | 5 kHz |
| 6 | 20 kHz | 20 kHz | 20 | 80 kHz | 2.5 kHz |
| 7 | 20 kHz | 10 kHz | 21 | 160 kHz | 160 kHz |
| 8 | 20 kHz | 5 kHz | 22 | 160 kHz | 80 kHz |

(continued)

| Index value | $\Delta f$ | S | Index value | $\Delta f$ | S |
|---|---|---|---|---|---|
| 9 | 20 kHz | 2.5 kHz | 23 | 160 kHz | 40 kHz |
| 10 | 40 kHz | 40 kHz | 24 | 160 kHz | 20 kHz |
| 11 | 40 kHz | 20 kHz | 25 | 160 kHz | 10 kHz |
| 12 | 40 kHz | 10 kHz | 26 | 160 kHz | 5 kHz |
| 13 | 40 kHz | 5 kHz | 27 | 160 kHz | 2.5 kHz |

Table 4 and Table 5 each show a corresponding index value set when Tu=6.25 µs and parameter values in a parameter group corresponding to each index value. However, this application is not limited thereto. Tu may be 5.56 µs. In this case, the first apparatus and the second apparatus may preconfigure a correspondence between an index value and parameter values in a parameter group shown in Table 6, or the second apparatus preconfigures a correspondence shown in Table 6, and the first apparatus obtains the correspondence shown in Table 6 from the second apparatus. The parameter group includes a third parameter and a fourth parameter. In the first correspondence between the plurality of bandwidths and the plurality of index value sets, a value of each bandwidth of the first frequency band corresponds to some or all index value sets in index values shown in Table 5. For example, in the first correspondence, an index value set corresponding to a first bandwidth 180 kHz includes an index value 0 to an index value 14; an index value set corresponding to a first bandwidth 360 kHz includes an index value 0 to an index value 20; and an index value set corresponding to a first bandwidth 540 kHz includes an index value 0 to an index value 20 and an index value 22 to an index value 27. An index value set corresponding to a first bandwidth 720 kHz includes all index values shown in Table 4.

**Table 6**

| Index value | $\Delta f$ | S | Index value | $\Delta f$ | S |
|---|---|---|---|---|---|
| 0 | 2.8125 kHz | 2.8125 kHz | 14 | 45 kHz | 2.8125 kHz |
| 1 | 5.625 kHz | 5.625 kHz | 15 | 90 kHz | 90 kHz |
| 2 | 5.625 kHz | 2.8125 kHz | 16 | 90 kHz | 45 kHz |
| 3 | 11.25 kHz | 11.25 kHz | 17 | 90 kHz | 22.5 kHz |
| 4 | 11.25 kHz | 5.625 kHz | 18 | 90 kHz | 11.25 kHz |
| 5 | 11.25 kHz | 2.8125 kHz | 19 | 90 kHz | 5.625 kHz |
| 6 | 22.5 kHz | 22.5 kHz | 20 | 90 kHz | 2.8125 kHz |
| 7 | 22.5 kHz | 11.25 kHz | 21 | 180 kHz | 180 kHz |
| 8 | 22.5 kHz | 5.625 kHz | 22 | 180 kHz | 90 kHz |
| 9 | 22.5 kHz | 2.8125 kHz | 23 | 180 kHz | 45 kHz |
| 10 | 45 kHz | 45 kHz | 24 | 180 kHz | 22.5 kHz |
| 11 | 45 kHz | 22.5 kHz | 25 | 180 kHz | 11.25 kHz |
| 12 | 45 kHz | 11.25 kHz | 26 | 180 kHz | 5.625 kHz |
| 13 | 45 kHz | 5.625 kHz | 27 | 180 kHz | 2.8125 kHz |

A manner in which the second apparatus indicates the first index value to the first apparatus may include but is not limited to the following two manners:

Manner 1: The second apparatus indicates the first index value to the first apparatus by using four bits. The first apparatus and the second apparatus determine, based on the first bandwidth, an index value that can be indicated by the four bits, that is, an index value in an index value set corresponding to the first bandwidth. If the first apparatus receives an index value that does not belong to the index value set corresponding to the first bandwidth, the first apparatus may consider that an error occurs in transmission, for example, an error occurs due to noise interference information. For example, as shown in Table 6, the first bandwidth is 180 kHz, and index values that can be indicated by the four bits are an index value 0 (that is, the four bits are 0000) to an index value 14 (the four bits are 1010). If the first apparatus receives the four bits 1110, it indicates an index value 16, the first apparatus considers that an error occurs in information transmission.

Manner 2: A quantity of information bits that are sent by the second apparatus to the first apparatus and that indicate the index value is determined based on a quantity of index values included in the index value set corresponding to the first bandwidth. In other words, the first apparatus determines the quantity of bits of the first index value based on the quantity of index values included in the first index value set.

For example, if the first bandwidth is 180 kHz, and an index value set includes 14 index values, the second apparatus may indicate, by using four bits, the 14 index values included in the index value set corresponding to 180 kHz. For example, if the four bits indicate 0000, it indicates that the second apparatus indicates a $1^{st}$ index value in the 14 index values, that is, an index value 0. If the four bits indicate 1110, it indicates that the second apparatus indicates a $14^{th}$ index value in the 14 index values, that is, an index value 14.

For another example, the first bandwidth is 540 kHz, a corresponding index value set includes an index value 0 to an index value 20 and an index value 22 to an index value 27. The second apparatus may indicate, by using five bits, the 27 index values included in the index value set corresponding to 540 kHz. The five bits indicate 00000 to 10100, and respectively correspond to a $1^{st}$ index value to a $21^{st}$ index value in the 27 index values in sequence, that is, an index value 0 to an index value 20. For example, the five bits indicate 10011, it indicates that the second apparatus indicates an index value 19. The five bits indicate 10101 to 11010, and respectively correspond to a $22^{nd}$ index value to a $27^{th}$ index value in the 27 index values in sequence. For example, the five bits indicate 10111, it indicates that the second apparatus indicates an index value 22.

Optionally, the second apparatus may further send indication information to the first apparatus, to indicate whether the first frequency domain resource is a single-sideband frequency domain resource or a double-sideband frequency domain resource. The indication information and the first index value may be carried in a same message, or may be separately sent to the first apparatus. The first index value may correspond to a value of a sideband indication parameter (that is, an example of the indication information). A value of the sideband indication parameter indicates that the frequency domain resource is a single-sideband frequency domain resource, and another value indicates that the frequency domain resource is a double-sideband frequency domain resource. For example, one column may be added to the parameter table (Table 1 to Table 6) corresponding to the first index value set, and the column shows a sideband indication parameter corresponding to each index. This is not limited in this application.

When a plurality of resource allocation units or a larger bandwidth resource in the cellular technology is used for communication in the radio frequency communication technology, this embodiment of this application further provides another implementation.

The first apparatus may preconfigure or obtain the first index value set from the second apparatus. Before S401, the second apparatus sends third information to the first apparatus. Correspondingly, the first apparatus receives the third information from the second apparatus, where the third information indicates a second frequency band in the first frequency band. The second apparatus sends the first index value to the first apparatus in S401, to notify the first apparatus of the first frequency domain resource that is in the second frequency band and that is used to send uplink information. The first apparatus may specifically determine the first frequency domain resource based on the second frequency band and the values of all the parameters in the parameter group corresponding to the first index value.

In an implementation, frequency domain locations of a plurality of subbands may be predefined in the first frequency band, and each subband corresponds to one piece of identification information. The plurality of subbands include the second frequency band. The third information sent by the second apparatus may include identification information of the second frequency band.

Bandwidths of the plurality of subbands may be the same. For example, a bandwidth of each subband is predefined, for example, may be 180 kHz. However, this application is not limited to a size of the bandwidth of the subband, and the size may also be another value. The plurality of subbands may not overlap with each other, or may partially overlap. This is not limited in this application.

After receiving the third information, the first apparatus may determine a frequency domain location of the second frequency band based on the identification information. After receiving the first index value, the first apparatus may determine the first frequency domain resource in the second frequency band based on values of parameters in a parameter group corresponding to the first index value.

In another implementation, the third information indicates a first offset, and a bandwidth of the second frequency band is predefined. The first offset is a frequency offset of a second frequency of the second frequency band relative to a third frequency of the first frequency band.

For example, the second frequency is a center frequency of the second frequency band, and the third frequency is a center frequency of the first frequency band.

For example, bandwidths of a plurality of subbands in the first frequency band are all 180 kHz. If a bandwidth of the first frequency band is an even multiple of 180 kHz, the first offset indicated by the third information is 90 kHz±n*180 kHz, where n is a positive integer. For example, the third information may include an index value of the first offset. As shown in FIG. 10, the first frequency band is 360 kHz, and includes two subbands whose bandwidths are 180 kHz in the second frequency band and the third frequency band. A correspondence between the offset and the index value may be shown in Table 7. If the third information indicates that an index value is 0, the first apparatus may determine that an offset of the center frequency of the second frequency band relative to the center frequency of the first frequency band is 90 kHz.

**Table 7**

| Index value | First offset |
|---|---|
| 0 | +90 kHz |
| 1 | -90 kHz |

For example, bandwidths of a plurality of subbands in the first frequency band are all 180 kHz. If a bandwidth of the first frequency band is an even multiple of 180 kHz, the first offset is 90 kHz+n* 180 kHz, where n is an integer. The third information may indicate the first offset by indicating the parameter n. For example, the third information may include an index value corresponding to a value of the parameter n. As shown in FIG. 10, the first frequency band is 360 kHz, and includes two subbands whose bandwidths are 180 kHz in the second frequency band and the third frequency band. A correspondence between the value of the parameter n and the index value may be shown in Table 7A. If the third information indicates that an index value is 0, the first apparatus may determine that the value of the parameter n is a value corresponding to the index value 0 shown in Table 7A, that is, n=0, and determines, based on the parameter n=0, that an offset of the center frequency of the second frequency band relative to the center frequency of the first frequency band is 90 kHz.

**Table 7A**

| Index value | Parameter n |
|---|---|
| 0 | 0 |
| 1 | -1 |

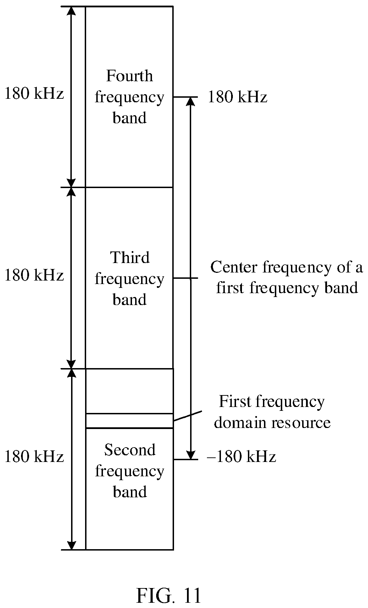

For another example, bandwidths of a plurality of subbands in the first frequency band are all 180 kHz. If a bandwidth of the first frequency band is an odd multiple of 180 kHz, the first offset indicated by the third information is±n*180 kHz, where n is a positive integer. For example, the third information may include an index value of the first offset. As shown in FIG. 11, the first frequency band is 540 kHz, and includes three subbands whose bandwidths are 180 kHz in the second frequency band, the third frequency band, and the fourth frequency band. A correspondence between the offset and the index value may be shown in Table 8. If the third information indicates that an index value is 2, the first apparatus may determine that an offset of the center frequency of the second frequency band relative to the center frequency of the first frequency band is -180 kHz.

**Table 8**

| Index value | First offset |
|---|---|
| 0 | 0 |
| 1 | 180 kHz |
| 2 | -180 kHz |

For another example, bandwidths of a plurality of subbands in the first frequency band are all 540 kHz. If a bandwidth of the first frequency band is an odd multiple of 540 kHz, the first offset is n* 180 kHz, where n is an integer. The third information may indicate the first offset by indicating the parameter n. For example, the third information may include an index value corresponding to a value of the parameter n. As shown in FIG. 11, the first frequency band is 540 kHz, and includes three subbands whose bandwidths are 180 kHz in the second frequency band, the third frequency band, and the fourth frequency band. A correspondence between the value of the parameter n and the index value may be shown in Table 8A. If the third information indicates that an index value is 0, the first apparatus may determine that the value of the parameter n is a value corresponding to the index value 2 shown in Table 8A, that is, n=-1, and determines, based on the parameter n=-1, that an offset of the center frequency of the second frequency band relative to the center frequency of the first frequency band is -180 kHz.

**Table 8A**

| Index value | Parameter n |
|---|---|
| 0 | 0 |
| 1 | 1 |
| 2 | -1 |

With reference to Table 7, Table 7A, Table 8, and Table 8A, the foregoing describes an indication manner in which the second apparatus indicates the second frequency band when the second frequency band is a single-sideband. If the second frequency band is a double-sideband, a correspondence between the first offset and the index value may be shown in Table 8B. If the third information indicates an index value 1, a first offset corresponding to the index value specifically indicates that an offset between each sideband of the second frequency band and a carrier frequency Fc is 180 kHz, that is, a center frequency of one sideband of the second frequency band is Fc+180 kHz, and a center frequency of the other sideband is Fc-180 kHz.

**Table 8B**

| Index value | First offset |
|---|---|
| 0 | 0 kHz |
| 1 | 180 kHz |

Alternatively, if the second frequency band is a double-sideband, a correspondence between the first offset and the index value may be shown in Table 8C. If the third information indicates an index value 1, a first offset corresponding to the index value includes 180 kHz and - 180 kHz, that is, a center frequency of one sideband of the second frequency band is Fc+180 kHz, and a center frequency of the other sideband is Fc-180 kHz.

**Table 8C**

| Index value | First offset |
|---|---|
| 0 | 0 kHz |
| 1 | $\pm$180 kHz |

Then, the second apparatus sends the first index value to the first apparatus. If the first index value is an index value 11 in Table 2, the first apparatus may determine that an offset of the center frequency of the first frequency domain resource relative to the center frequency of the second frequency band is 40 kHz, that is, an offset relative to the center frequency of the first frequency band is -180 kHz+40 kHz=-140 kHz. If the first frequency domain resource is a single-sideband frequency domain resource, a bandwidth of the first frequency domain resource is 2S, that is 40 kHz, the first frequency domain resource may be shown in FIG. 11. However, this application is not limited thereto.

Optionally, in this implementation, the first apparatus may receive the second information from the second apparatus, and determine, based on whether the indicated bandwidth (that is, the first bandwidth) of the first frequency band is greater than 180 kHz, whether the third information needs to be received. If the first bandwidth is not greater than 180 kHz, the second apparatus may send an index value in the first index value set to the first apparatus, to notify the first apparatus of the first frequency domain resource for sending the uplink information. In other words, the second apparatus does not send the third information to the first apparatus. If the first bandwidth is greater than 180 kHz, the second apparatus needs to send the third information to the first apparatus, to indicate the second frequency band in the first frequency band, and notify the first apparatus of the first frequency domain resource in the second frequency band.

In another implementation, the third information indicates a first offset and a bandwidth of the second frequency band.

For example, the third information may include an index value, and the index value corresponds to a value of the first offset and a value of the bandwidth of the second frequency band. The third information may indicate an index value in an index value 0 to an index value 5 shown in Table 9. After receiving the third information, the first apparatus may determine an offset of the center frequency of the second frequency band relative to the center frequency of the

24

first frequency band and the bandwidth of the second frequency band based on the index value, so as to determine a location of the second frequency band. For example, the third information indicates an index value 4. After receiving the third information, the first apparatus may determine that an offset of the center frequency of the second frequency band relative to the center frequency of the first frequency band is 180 kHz, and a bandwidth of the second frequency band is 360 kHz. In other words, the bandwidth of the second frequency band includes 80 kHz of frequency domain resources on both sides of the center frequency of the second frequency band. However, this application is not limited thereto.

**Table 9**

| Index value | First offset | Bandwidth of a second frequency band |
|---|---|---|
| 0 | 0 | 180 kHz |
| 1 | 0 | 360 kHz |
| 2 | +90 kHz | 180 kHz |
| 3 | -90 kHz | 180 kHz |
| 4 | 180 kHz | 360 kHz |
| 5 | -180 kHz | 360 kHz |

This embodiment of this application further provides another indication manner of the first frequency domain resource. The second apparatus may send indication information A to the first apparatus. The indication information A indicates a frequency domain resource in a preset frequency band (for example, the preset frequency band is 180 kHz with a carrier frequency Fc as a center frequency). For example, the second apparatus may indicate an index value based on the indication information A, and the index value corresponds to values of all parameters in a parameter group. Specifically, this is similar to the foregoing indication manner of the first frequency domain resource. For implementation, refer to the foregoing descriptions. For brevity, details are not described herein again. The first apparatus may determine a frequency domain location of a frequency domain resource A in the preset frequency band based on the indication information A. The second apparatus may further send indication information B to the first apparatus, where the indication information B indicates a second offset, the second offset is an offset between the first frequency domain resource and the frequency domain resource A, and the frequency domain resource B is used to send uplink information. In addition, a size of the first frequency domain resource is the same as a size of the frequency domain resource A. In other words, the first frequency domain resource is obtained by shifting the frequency domain resource A by the second offset. The first apparatus may determine, based on the second offset, a location of the first frequency domain resource after the frequency domain resource A is shifted by the second offset. However, this application is not limited thereto.

In the foregoing resource allocation solution provided in this embodiment of this application, the second apparatus may alternatively be a reader, the first apparatus may be a tag, and the second apparatus may indicate, in this manner, a tag other than the first apparatus to send the uplink information on a frequency domain resource other than the first frequency domain resource. This reduces a waste of uplink frequency domain resources and improves frequency domain resource utilization.

S402: The first apparatus sends the uplink information to the second apparatus on the first frequency domain resource.

The first apparatus may determine, based on the first index value indicated by the second apparatus, the first frequency domain resource used to send the uplink information. The first apparatus sends the uplink information to the second apparatus on the first frequency domain resource.

According to this embodiment of this application, the frequency domain resource allocation manner is provided, so that the two communication apparatuses that perform communication can reach a consensus on the frequency domain resource for sending the uplink information. In addition, the second apparatus may allocate, according to the foregoing solution provided in this embodiment of this application, the different frequency domain resources in the frequency band to the plurality of communication apparatuses, so that the plurality of communication apparatuses can simultaneously send the uplink information through the different frequency domain resources, thereby reducing a waste of uplink frequency domain resources and improving frequency domain resource utilization.

The foregoing solution provided in this application may be applied to the scenario in which the reflective communication technology (RFID technology) and the cellular technology (for example, the NR technology and the LTE technology) share the physical resource for separate communication. According to the foregoing solution provided in this application, the reader and the tag can reach a consensus on the frequency domain resource used for communication, thereby reducing a waste of uplink frequency domain resources and improving frequency domain resource utilization.

It should be noted that, in this embodiment of this application, a problem that an effective frequency domain resource allocation manner lacks when the reflective communication technology (for example, the RFID technology) and the cellular technology (for example, the NR) share the physical resource can be resolved. However, the solution provided in this embodiment of this application is not limited to this application scenario, and may also be applied to another application scenario.

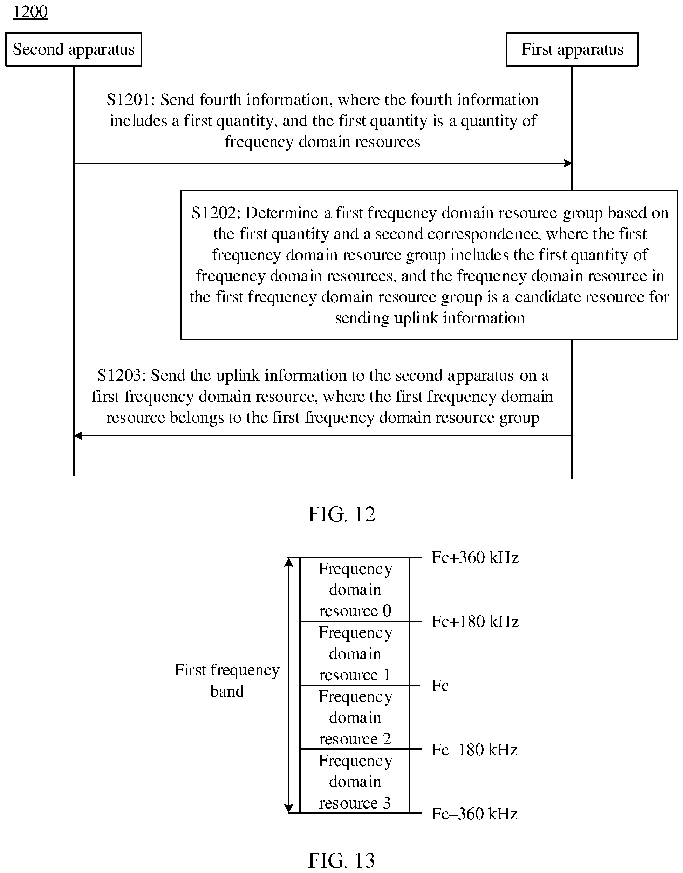

FIG. 12 is another schematic flowchart of a resource allocation method 1200 according to an embodiment of this application. It should be noted that, in the embodiment shown in FIG. 12, a second apparatus may be a reader (or a reader/writer), or the second apparatus may be configured in the reader (or the reader/writer), such as a chip. A first apparatus may be a tag, or the second apparatus may be configured in the tag, such as a chip. However, this is not limited in this application.

S1201: The second apparatus sends fourth information to the first apparatus, where the fourth information includes a first quantity, and the first quantity is a quantity of frequency domain resources.

Correspondingly, the first apparatus receives the fourth information from the second apparatus.

S1202: The first apparatus determines a first frequency domain resource group based on the first quantity and a second correspondence, where the first frequency domain resource group includes the first quantity of frequency domain resources, and the frequency domain resource in the first frequency domain resource group is a candidate resource for sending uplink information.

The second correspondence includes a plurality of quantities, each of the plurality of quantities corresponds to a frequency domain resource group in a first frequency band, and each frequency domain resource group includes a corresponding quantity of frequency domain resources.

Optionally, a resource location of the frequency domain resource in each frequency domain resource group is predefined, or the second apparatus may notify the first apparatus of the resource location.

A maximum frequency band (that is, the first frequency band) used by the first apparatus to transmit the uplink information includes a plurality of frequency domain resources. For example, as shown in FIG. 13, a bandwidth of the first frequency band is 720 kHz, a center frequency of the first frequency band is Fc, and the first frequency band includes four frequency domain resources in total: a frequency domain resource 0 (that is, Fc+180 kHz to Fc+360 kHz), a frequency domain resource 1 (that is, Fc to Fc+180 kHz), a frequency domain resource 2 (that is, Fc-180 kHz to Fc), and a frequency domain resource 3 (that is, Fc-360 kHz to Fc-180 kHz). A bandwidth of each of the four frequency domain resources is 180 kHz and the four frequency domain resources are arranged in the first frequency band in sequence.

For example, the second correspondence may be shown in Table 10. To be specific, the second correspondence includes four quantities of frequency domain resources, and each of the four quantities corresponds to a frequency domain resource group in the first frequency band. For example, a quantity 1 corresponds to a frequency domain resource group 1, a frequency domain resource group corresponding to a quantity 2 includes a frequency domain resource 1 and a frequency domain resource 2, and a frequency domain resource group corresponding to a quantity 3 includes a frequency domain resource 1, a frequency domain resource 2, and a frequency domain resource 3. A frequency domain resource group corresponding to a quantity 4 includes a frequency domain resource 1, a frequency domain resource 2, a frequency domain resource 3, and a frequency domain resource 4. If the first quantity sent by the second apparatus to the first apparatus is 3, after receiving the first quantity, the first apparatus may determine a first frequency domain resource group based on the first quantity 3 and the second correspondence. The first frequency domain resource group includes a frequency domain resource 1, a frequency domain resource 2, and a frequency domain resource 3, and the frequency domain resources included in the first frequency domain resource group are candidate frequency domain resources for sending uplink information.

**Table 10**

| Quantity | Frequency domain resource group |
|---|---|
| 1 | Frequency domain resource 1 |
| 2 | Frequency domain resource 1, frequency domain resource 2 |
| 3 | Frequency domain resource 0, frequency domain resource 1, frequency domain resource 2 |
| 4 | Frequency domain resource 0, frequency domain resource 1, frequency domain resource 2, frequency domain resource 4 |

Optionally, a frequency domain interval may be included between two adjacent frequency domain resources in the first frequency band, and the frequency domain interval is greater than or equal to a preset threshold.

The guard interval reserved between the two adjacent frequency domain resources can avoid interference between uplink information carried between the two adjacent frequency domain resources. The preset threshold may be a minimum interval at which interference between information carried on the two frequency domain resources can be avoided.

S1203: The first apparatus sends the uplink information to the second apparatus on a first frequency domain resource, where the first frequency domain resource belongs to the first frequency domain resource group.

After the first apparatus determines, based on the first quantity, that the first frequency domain resource group is a candidate frequency domain resource group of the uplink information, when the first apparatus sends the uplink information to the second apparatus, the first apparatus may send the uplink information to the second apparatus on the first frequency domain resource in the first frequency domain resource group. Optionally, the first apparatus may randomly select, from the first frequency domain resource group, a frequency domain resource for sending the uplink information. For example, the first apparatus randomly selects the first frequency domain resource from the first frequency domain resource group, or before the first apparatus sends the uplink information, the second apparatus sends, to the first apparatus, indication information (for example, identification information indicating the first frequency domain resource or values of parameters in a parameter group corresponding to the first frequency domain resource) indicating the first frequency domain resource, the first apparatus sends the uplink information on the first frequency domain resource based on an indication of the second apparatus. However, this application is not limited thereto.

According to the foregoing solution, the second apparatus notifies the first apparatus of a quantity of candidate frequency domain resources in the first frequency band, so that the second apparatus and the first apparatus reach a consensus on the candidate frequency domain resource.

This embodiment of this application further provides the following indication manner in which the second apparatus indicates at least one candidate frequency domain resource in the first frequency band.

For example, the second apparatus sends indication information A to the first apparatus, where the indication information A indicates the at least one candidate frequency domain resource in the first frequency band.

Manner 1: The indication information A may include a bit group, the bit group may be referred to as a bit table or a bitmap (bitmap), and one bit in the bit group corresponds to one frequency domain resource. If a bit in the bit group indicates 1, it indicates that a frequency domain resource corresponding to the bit is the candidate frequency domain resource; or if a bit in the bit group indicates 0, it indicates that a frequency domain resource corresponding to the bit is not the candidate frequency domain resource. Alternatively, if a bit in the bit group indicates 0, it indicates that a frequency domain resource corresponding to the bit is the candidate frequency domain resource; or if a bit in the bit group indicates 1, it indicates that a frequency domain resource corresponding to the bit is not the candidate frequency domain resource.

For example, the bit group includes N bits, and each of the N bits corresponds to values of all parameters in a parameter group. For example, a bit corresponds to a value of B and a value of M in a row shown in Table 1, or a bit corresponds to a value of $\Delta f$ and a value of S in a row shown in Table 2. In an example, the bit group includes four bits. A $1^{st}$ bit in the four bits corresponds to $\Delta f$=2.5 kHz and S=2.5 kHz that correspond to an index value 0 shown in Table 2; a $2^{nd}$ bit corresponds to $\Delta f$=10 kHz and S=5 kHz that correspond to an index value 4 shown in Table 2; a $3^{rd}$ bit corresponds to $\Delta f$=20 kHz and S=5 kHz that correspond to an index value 8 shown in Table 2; and a $4^{th}$ bit corresponds to $\Delta f$=40 kHz and S=10 kHz that correspond to an index value 12 shown in Table 2. If a bit in the four bits indicates 1, it indicates that a frequency domain resource corresponding to the bit is the candidate frequency domain resource; or if a bit indicates 0, it indicates that a frequency domain resource corresponding to the bit is not the candidate frequency domain resource. The four bits in the indication information A sent by the second apparatus to the first apparatus may be 0110. In this case, the first apparatus may determine, based on that a $2^{nd}$ bit and a $3^{rd}$ bit in the four bits indicate 1, that a frequency domain resource corresponding to the $2^{nd}$ bit (that is, a frequency domain resource of which an offset of a first frequency relative to a carrier frequency is $\Delta f$=10 kHz and a bandwidth of each sideband is 2S=2*5=10 kHz) and a frequency domain resource corresponding to the $3^{rd}$ bit (that is, a frequency domain resource of which an offset of a first frequency relative to a carrier frequency is $\Delta f$=20 kHz and a bandwidth of each sideband is 2S=2*5=10 kHz) are candidate frequency domain resources for sending the uplink information.

In an implementation, the first apparatus may randomly select one frequency domain resource from the two frequency domain resources to send the uplink information.

In another implementation, the second apparatus further sends indication information B to the first apparatus, where the indication information B indicates one of the two frequency domain resources.

Optionally, a quantity of bits included in the indication information B is determined based on a quantity of candidate frequency domain resources.

The quantity of candidate frequency domain resources is the same as a quantity of bits that indicate 1 in the bit group in the indication information A. In other words, the quantity of bits included in the indication information B may be determined based on the quantity of bits that indicate 1 in the bit group in the indication information A.

For example, in the foregoing example, if the four bits in the indication information A indicate 0110, the indication information B includes one bit. If the bit indicates 0, it indicates a frequency domain resource corresponding to a $1^{st}$ bit that indicates 1 in the indication information A, that is, a frequency domain resource of which an offset of a first frequency relative to a carrier frequency is $\Delta f$=10 kHz and a bandwidth of each sideband is 2S=2*5=10 kHz; or if the bit in the indication information B indicates 1, it indicates a frequency domain resource corresponding to a $2^{nd}$ bit that indicates 1 in the indication information A, that is, a frequency domain resource of which an offset of a first frequency relative to a carrier frequency is Δf=20 kHz and a bandwidth of each sideband is 2S=2*5=10 kHz.

For another example, if the four bits in the indication information A indicate 0111, and a $1^{st}$ bit in the four bits corresponds to a frequency domain resource 0, a $2^{nd}$ bit corresponds to a frequency domain resource 1, a $3^{rd}$ bit corresponds to a frequency domain resource 2, and a $4^{th}$ bit corresponds to a frequency domain resource 3, 0111 in the indication information A indicates that the frequency domain resource 1, the frequency domain resource 2, and the frequency domain resource 3 are candidate frequency domain resources. The first apparatus may determine that the indication information B includes two bits. If the two bits indicate "00", it indicates a frequency domain resource corresponding to a $1^{st}$ bit that indicates 1 in the four bits in the indication information A, that is, the frequency domain resource 0; if the two bits indicate "01 ", it indicates a frequency domain resource corresponding to a $2^{nd}$ bit that indicates 1 in the four bits in the indication information A, that is, the frequency domain resource 1; or if the two bits indicate "10", it indicates a frequency domain resource corresponding to a $3^{rd}$ bit that indicates 1 in the four bits in the indication information A, that is, the frequency domain resource 3.

Specifically, the first apparatus determines, from the plurality of candidate frequency domain resources, a frequency domain resource for sending the uplink information, for example, the frequency domain resource 1. The first apparatus may determine, based on parameters Δf and S of the frequency domain resource 1, a quantity B of repetition times of each bit in an encoded bit sequence and a quantity M of encoding repetition times. After the first apparatus processes, based on M, B, and Tu, an information bit carried on the uplink information, a resource occupied by the sent uplink information in frequency domain is the frequency domain resource 1.

Manner 2: The indication information A may include a plurality of candidate frequency domain resource indication bitmaps (bitmaps, or may be referred to as bit tables), and one candidate frequency domain resource indication bit table indicates that a frequency band in the first frequency band includes the candidate frequency domain resource. One bit in each candidate frequency domain resource indication bit table corresponds to one frequency domain resource in a frequency band corresponding to the bit table in which the bit is located, and indicates whether the corresponding frequency domain resource is the candidate frequency domain resource.

For example, the first frequency band includes four frequency bands, for example, frequency bands 0, 1, 2, and 3. The indication information A includes four candidate frequency domain resource indication bit tables that one-to-one correspond to the four frequency bands. For example, the frequency band 0 corresponds to a candidate frequency domain resource indication bit table 0, the frequency band 1 corresponds to a candidate frequency domain resource indication bit table 1, the frequency band 2 corresponds to a candidate frequency domain resource indication bit table 2, and the frequency band 3 corresponds to a candidate frequency domain resource indication bit table 3. If each of the four frequency bands includes two frequency domain resources, each candidate resource indication bit table includes two bits, and one bit corresponds to one frequency domain resource in a frequency band corresponding to the bit table in which the bit is located. For example, the candidate frequency domain resource indication bit table 0 corresponding to the frequency band 0 includes two bits. A $1^{st}$ bit corresponds to a $1^{st}$ frequency domain resource in the frequency band 0. If the bit indicates 1, it indicates that the $1^{st}$ frequency domain resource in the frequency band 0 is the candidate frequency domain resource; or if the bit indicates 0, it indicates that the $1^{st}$ frequency domain resource in the frequency band 0 is not the candidate frequency domain resource. A $2^{nd}$ bit in the two bits in the candidate frequency domain resource indication bit table 0 corresponds to a $2^{nd}$ frequency domain resource in the frequency band 0, and indicates whether the $2^{nd}$ frequency domain resource in the frequency band 0 is the candidate frequency domain resource. An indication manner of another candidate frequency domain resource indication bit table is the same as that of the candidate frequency domain resource indication bit table 0. For brevity, details are not described herein again.

Optionally, the indication information A may further include a first bit table. The first bit table includes a plurality of bits, and one of the plurality of bits corresponds to one frequency band in the first frequency band, and indicates whether the indication information A includes a candidate frequency domain resource indication bit table of a corresponding frequency band.

For example, if the first frequency band includes four frequency bands, such as frequency bands 0, 1, 2, and 3, the first bit table in the indication information A includes four bits. A $1^{st}$ bit corresponds to the frequency band 0, and indicates whether the indication information A includes a candidate frequency domain resource indication bit table 0 corresponding to the frequency band 0. For example, if the bit indicates 1, it indicates that the candidate frequency domain resource indication bit table 0 is included; or if the bit indicates 0, it indicates that the candidate frequency domain resource indication bit table 0 is not included. A $2^{nd}$ bit corresponds to the frequency band 1, and indicates whether the indication information A includes a candidate frequency domain resource indication bit table 1 corresponding to the frequency band 1. A $3^{rd}$ bit and a $4^{th}$ bit respectively correspond to the frequency band 2 and the frequency band 3. For example, if the four bits in the first bit table are 0111, it indicates that the indication information A does not include the candidate frequency domain resource indication bit table 0 corresponding to the frequency band 0, but includes the candidate frequency domain resource indication bit tables 1, 2, and 3 respectively corresponding to the frequency bands 1, 2, and 3. If the indication information A does not include a candidate frequency domain resource indication bit table corresponding to a frequency band, it indicates that the frequency band does not include the candidate frequency domain resource.

Manner 3: The second apparatus may indicate each candidate frequency domain resource in the manner of indicating the first frequency domain resource in the embodiment shown in FIG. 4.

For example, the second apparatus may send a plurality of index values to the first apparatus. The plurality of index values belong to the first index value set, and each index value corresponds to values of all parameters in a parameter group. The first apparatus determines each candidate frequency domain resource based on the values of all the parameters in the parameter group corresponding to each index value. The plurality of index values may be carried on different messages and separately sent by the second apparatus to the first apparatus, or the plurality of index values may be carried on a same message and sent by the second apparatus to the first apparatus. This is not limited in this application.

For another example, the second apparatus may send frequency band indication information and in-band frequency domain resource indication information to the first apparatus. The frequency band indication information indicates a frequency band in a plurality of frequency bands in the first frequency band, for example, a frequency band A, and the in-band frequency domain resource indication information indicates at least one candidate frequency domain resource in the frequency band A. Alternatively, the second apparatus may send a plurality of groups of frequency band indication information and in-band frequency domain resource indication information to the first apparatus, and the first apparatus may determine, based on the plurality of groups of frequency band indication information and in-band frequency domain resource indication information, a candidate frequency domain resource included in each of a plurality of frequency bands in the first frequency band.

Manner 4: The second apparatus indicates the at least one candidate frequency domain resource in the first frequency band based on the indication information A. The indication information A may include a plurality of frequency domain resource quantity indication fields corresponding to a plurality of frequency bands in the first frequency band, and a frequency domain resource quantity indication field indicates a quantity of candidate frequency domain resources included in a corresponding frequency band. In the indication information A, the plurality of frequency domain resource quantity indication fields one-to-one correspond to the plurality of frequency bands in sequence, and the plurality of frequency bands are arranged in ascending or descending order of frequencies in sequence. For example, a 1st frequency domain resource quantity indication field corresponds to a 1st frequency band in the first frequency band, a 2nd frequency domain resource quantity indication field corresponds to a 2nd frequency band in the first frequency band, and the like. The indication information A further includes a plurality of frequency domain resource indication fields corresponding to the plurality of frequency bands. A correspondence between the plurality of frequency bands and the plurality of frequency domain resource indication fields is similar to the correspondence between the plurality of frequency domain resource quantity indication fields and the plurality of frequency bands. For implementation, refer to the foregoing descriptions. For brevity, details are not described herein again. A frequency domain resource indication field indicates that at least one frequency domain resource in a corresponding frequency band is a candidate frequency domain resource. After receiving the indication information A, the first apparatus may determine one or more candidate frequency domain resources in one or more frequency bands in the first frequency band based on the indication information A.

The first frequency band includes three frequency domain resources: a frequency domain resource 0, a frequency domain resource 1, and a frequency domain resource 2. The indication information A includes frequency domain resource quantity indication fields 0, 1, and 2 that correspond, in sequence, to the frequency domain resource 0, the frequency domain resource 1, and the frequency domain resource 2, and frequency domain resource indication fields 0, 1, and 2 that correspond, in sequence, to the frequency domain resource 0, the frequency domain resource 1, and the frequency domain resource 2.

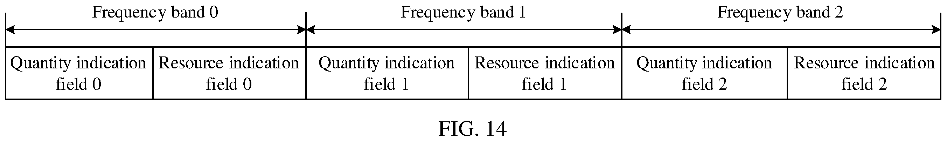

In an implementation, the frequency domain resource quantity indication field and the frequency domain resource indication field in the indication information A are shown in FIG. 14. In FIG. 14, the frequency domain resource quantity indication field is briefly referred to as a quantity indication field, and the frequency domain resource indication field is briefly referred to as a resource indication field. As shown in FIG. 14, the frequency domain resource quantity indication field 0 corresponding to the frequency band 0 may first appear in the indication information A, and the frequency domain resource indication field 0 corresponding to the frequency band 0 follows the frequency domain resource quantity indication field 0. For example, if the frequency domain resource quantity indication field 0 indicates that the frequency domain resource 0 includes one candidate frequency domain resource, the frequency domain resource indication field 0 indicates one frequency domain resource in the frequency band 0, and the frequency domain resource is a candidate frequency domain resource in the frequency band 0. The frequency domain resource quantity indication field 1 and the frequency domain resource indication field 1 that correspond to the frequency band 1 follow the frequency domain resource indication field 0 corresponding to the frequency band 0 in sequence. For example, if the frequency domain resource quantity indication field 1 indicates that the frequency band 1 includes two candidate frequency domain resources, the frequency domain resource indication field 1 indicates two frequency domain resources in the frequency band 1, that is, the two frequency domain resources are candidate frequency domain resources in the frequency band 1. The frequency domain resource quantity indication field 2 and the frequency domain resource indication field 2 that correspond to the frequency band 2 follow the frequency domain resource indication field 1 of the frequency band 1 in sequence. For example, if the frequency domain resource quantity indication field 2 indicates that the frequency band 2 includes 0 candidate frequency domain resource, the frequency domain resource indication field 2 may indicate a predefined value, and the predefined value may indicate that no frequency domain resource is indicated, or the indication information A may not include the frequency domain resource indication field 2.

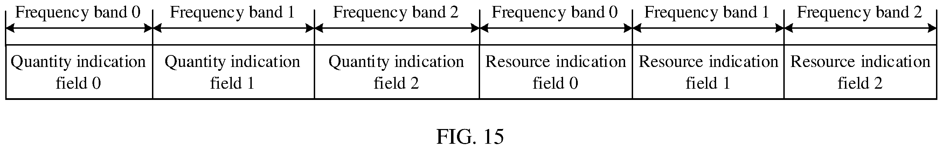

In another implementation, the frequency domain resource quantity indication field and the frequency domain resource indication field in the indication information A may be shown in FIG. 15. In the indication information A, for each frequency band, a corresponding frequency domain resource quantity indication field (briefly referred to as a quantity indication field in FIG. 15) may appear, and then a corresponding frequency domain resource indication field (briefly referred to as a resource indication field in FIG. 15) may appear, for example, the frequency domain resource quantity indication field 0 corresponding to the frequency band 0, then the frequency domain resource quantity indication field 1 corresponding to the frequency band 1 and the frequency domain resource quantity indication field 2 corresponding to the frequency band 1, and then frequency domain resource indication fields corresponding to all frequency bands, which are the frequency domain resource indication field 0, the frequency domain resource quantity indication field 1, and the frequency domain resource quantity indication field 2 in sequence.

The methods provided in embodiments of this application are described above in detail with reference to FIG. 4 to FIG. 15. The following describes a communication apparatus and a communication device provided in embodiments of this application with reference to accompanying drawings. To implement functions in the methods provided in the foregoing embodiments of this application, each network element may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

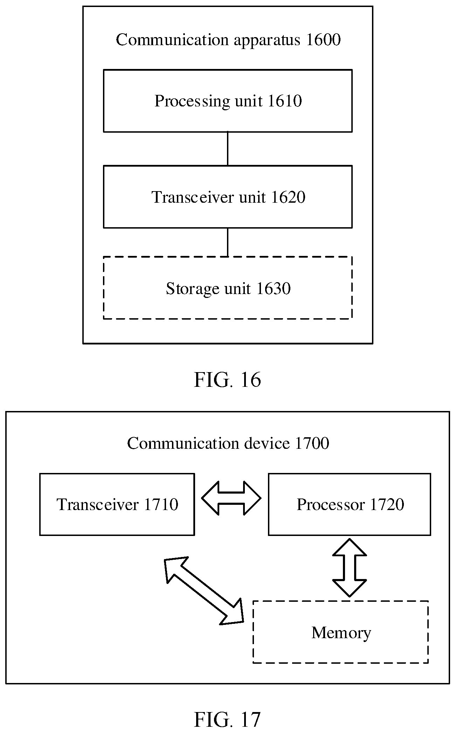

FIG. 16 is a block diagram of a communication apparatus according to an embodiment of this application. As shown in FIG. 16, a communication apparatus 1600 may include a transceiver unit 1620.

In a possible design, the communication apparatus 1600 may correspond to the first apparatus in the foregoing method embodiment, or another apparatus, module, circuit, unit, or the like that can implement the method of the first apparatus.

It should be understood that the communication apparatus 1600 may include units configured to perform the methods performed by the first apparatus in the methods shown in FIG. 4 and FIG. 12. In addition, the units in the communication apparatus 1600 and the foregoing other operations and/or functions are separately intended to implement corresponding procedures of the methods shown in FIG. 4 and FIG. 12.

Optionally, the communication apparatus 1600 may further include a processing unit 1610. The processing unit 1610 may be configured to process instructions or data, to implement a corresponding operation.

It should be further understood that when the communication apparatus 1600 is a chip, the transceiver unit 1620 in the communication apparatus 1600 may be an input/output interface or a circuit in the chip, and the processing unit 1610 in the communication apparatus 1600 may be a processor in the chip.

Optionally, the communication apparatus 1600 may further include a storage unit 1630. The storage unit 1630 may be configured to store instructions or data. The processing unit 1610 may execute the instructions or the data stored in the storage unit, to enable the communication apparatus to implement a corresponding operation.

It should be understood that the transceiver unit 1620 in the communication apparatus 1600 may be implemented through a communication interface (for example, a transceiver or an input/output interface), for example, may correspond to a transceiver 1710 in a communication device 1700 shown in FIG. 17. The processing unit 1610 in the communication apparatus 1600 may be implemented through at least one processor, for example, may correspond to a processor 1720 in the communication device 1700 shown in FIG. 17. Alternatively, the processing unit 1610 in the communication apparatus 1600 may be implemented through at least one logic circuit. The storage unit 1630 in the communication apparatus 1600 may correspond to a memory in the communication device 1700 shown in FIG. 17.

It should be further understood that a specific process in which the units perform the foregoing corresponding steps is described in detail in the foregoing method embodiments. For brevity, details are not described herein again.

In a possible design, the communication apparatus 1600 may correspond to the second apparatus in the foregoing method embodiment, or another apparatus, module, circuit, unit, or the like that can implement the method of the second apparatus.

It should be understood that the communication apparatus 1600 may include units configured to perform the methods performed by the second apparatus in the methods shown in FIG. 4 and FIG. 12. In addition, the units in the communication apparatus 1600 and the foregoing other operations and/or functions are separately intended to implement corresponding procedures of the methods shown in FIG. 4 and FIG. 12.

Optionally, the communication apparatus 1600 may further include a processing unit 1610. The processing unit 1610 may be configured to process instructions or data, to implement a corresponding operation.

It should be further understood that when the communication apparatus 1600 is a chip, the transceiver unit 1620 in the communication apparatus 1600 may be an input/output interface or a circuit in the chip, and the processing unit 1610 in the communication apparatus 1600 may be a processor in the chip.

Optionally, the communication apparatus 1600 may further include a storage unit 1630. The storage unit 1630 may be configured to store instructions or data. The processing unit 1610 may execute the instructions or the data stored in the storage unit, to enable the communication apparatus to implement a corresponding operation.

It should be understood that the transceiver unit 1620 in the communication apparatus 1600 may be implemented through a communication interface (for example, a transceiver or an input/output interface), for example, may correspond to a transceiver 1710 in a communication device 1700 shown in FIG. 17. The processing unit 1610 in the communication apparatus 1600 may be implemented through at least one processor, for example, may correspond to a processor 1720 in the communication device 1700 shown in FIG. 17. Alternatively, the processing unit 1610 in the communication apparatus 1600 may be implemented through at least one logic circuit. The storage unit 1630 in the communication apparatus 1600 may correspond to a memory in the communication device 1700 shown in FIG. 17.

It should be further understood that a specific process in which the units perform the foregoing corresponding steps is described in detail in the foregoing method embodiments. For brevity, details are not described herein again.

FIG. 17 is a diagram of a structure of a communication device 1700 according to an embodiment of this application.

In an implementation, the communication device 1700 may be applied to the system shown in FIG. 1, and may correspond to the tag 102 in the system shown in FIG. 1, to perform a function of the first apparatus in the foregoing method embodiment. For example, when being used as a tag, the communication device 1700 is configured with the first apparatus. As shown in the figure, the communication device 1700 includes a processor 1720 and a transceiver 1710. Optionally, the communication device 1700 further includes a memory. The processor 1720, the transceiver 1710, and the memory may communicate with each other through an internal connection path, to transmit a control signal and/or a data signal. The memory is configured to store a computer program, and the processor 1720 is configured to execute the computer program in the memory, to control the transceiver 1710 to receive and send a signal.

The processor 1720 may be configured to perform an action implemented inside the communication device described in the foregoing method embodiment, and the transceiver 1710 may be configured to perform an action of sending performed by the first apparatus to the second apparatus or receiving from the second apparatus described in the foregoing method embodiment. For details, refer to the descriptions in the foregoing method embodiments. Details are not described herein again.

Optionally, the communication device 1700 may further include a power supply, configured to supply electric energy to various components or circuits in the communication device.

In another implementation, the communication device 1700 may be applied to the system shown in FIG. 1, and may correspond to the reader 101 in the system shown in FIG. 1, to perform a function of the second apparatus in the foregoing method embodiment. For example, when being used as a reader, the communication device 1700 is configured with the second apparatus. As shown in the figure, the communication device 1700 includes a processor 1720 and a transceiver 1710. Optionally, the communication device 1700 further includes a memory. The processor 1720, the transceiver 1710, and the memory may communicate with each other through an internal connection path, to transmit a control signal and/or a data signal. The memory is configured to store a computer program, and the processor 1720 is configured to execute the computer program in the memory, to control the transceiver 1710 to receive and send a signal.

The processor 1720 may be configured to perform an action implemented inside the communication device described in the foregoing method embodiment, and the transceiver 1710 may be configured to perform an action of sending performed by the second apparatus to the first apparatus or receiving from the first apparatus described in the foregoing method embodiment. For details, refer to the descriptions in the foregoing method embodiments. Details are not described herein again.

Optionally, the communication device 1700 may further include a power supply, configured to supply electric energy to various components or circuits in the communication device.

An embodiment of this application further provides a processing apparatus, and the processing apparatus includes a processor and a (communication) interface. The processor is configured to perform the method according to any one of the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

According to the methods provided in embodiments of this application, this application further provides a computer program product. The computer program product includes computer program code. When the computer program code is executed by one or more processors, an apparatus including the processor is enabled to perform the methods in embodiments shown in FIG. 4 and FIG. 12.

The technical solutions provided in embodiments of this application may be fully or partially implemented through software, hardware, firmware, or any combination thereof. When software is used to implement embodiments, all or some of embodiments may be implemented in a form of a computer program product. The computer program product includes one or more computer instructions. When the computer program instructions are loaded and executed on the computer, all or some of the procedures or functions according to embodiments of this application are generated. The computer instructions may be stored in a computer-readable storage medium, or transmitted from one computer-readable storage medium to another computer-readable storage medium. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

According to the methods provided in embodiments of this application, this application further provides a computer-readable storage medium. The computer-readable storage medium stores program code. When the program code is executed by one or more processors, an apparatus including the processor is enabled to perform the methods in embodiments shown in FIG. 4 and FIG. 12.

According to the methods provided in embodiments of this application, this application further provides a system, including the foregoing one or more first apparatuses. The system may further include the foregoing one or more third apparatuses.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A resource allocation method, comprising:

    receiving, by a first apparatus, a first index value from a second apparatus, wherein the first index value belongs to a first index value set, the first index value set comprises a plurality of index values, each index value corresponds to a combination of values of all parameters in a parameter group, the parameter group comprises a plurality of parameters, the first index value corresponds to a combination of values of all parameters in a parameter group, and the combination of values of all parameters in a parameter group corresponding to the first index value corresponds to a first frequency domain resource; and
    sending, by the first apparatus, uplink information on the first frequency domain resource.

2.  The method according to claim 1, wherein the parameter group comprises one or more of the following parameters:

    a first parameter for determining bit transmission duration in the uplink information;
    a second parameter indicating a quantity of repetition times of the uplink information;
    a third parameter indicating a first frequency of the frequency domain resource; and
    a fourth parameter indicating a frequency domain bandwidth of the frequency domain resource or a data rate.

**3.** The method according to claim 2, wherein

the first parameter is a quantity of repetition times of each bit in an encoded bit sequence, and the encoded bit sequence is a bit sequence obtained by encoding an information bit in the uplink information; and/or

the quantity of repetition times of the uplink information is a quantity of repetition times of the information bit in the uplink information, or a quantity of repetition times of an encoded information bit in the uplink information; and/or

the third parameter is an offset of the first frequency of the frequency domain resource relative to a reference frequency.

**4.** The method according to claim 2 or 3, wherein the parameter group comprises the first parameter and the second parameter, and the method further comprises:

determining, by the first apparatus, an offset of a center frequency of the first frequency domain resource relative to the reference frequency based on a value of the first parameter of the first frequency domain resource and first duration, wherein the first duration is transmission duration of an encoded bit sequence obtained by encoding an information bit when the quantity of repetition times of the encoded information bit is 1; and

determining, by the first apparatus, a frequency domain bandwidth of the first frequency domain resource or a transmission rate of the uplink information based on the value of the first parameter of the first frequency domain resource, a value of the second parameter of the first frequency domain resource, and the first duration.

**5.** The method according to claim 4, wherein
a value B of the first parameter of the first frequency domain resource satisfies:

$$B=1/(Tu*\Delta f);$$

and
a value M of the second parameter of the first frequency domain resource satisfies:

$$M=\Delta f/S,$$

wherein $\Delta f$ is the offset of the first frequency of the first frequency domain resource relative to the reference frequency, S is the transmission rate of the uplink information, and Tu is the first duration.

**6.** The method according to any one of claims 2 to 5, wherein the first frequency is a center frequency, a start frequency, or an end frequency of the frequency domain resource.

**7.** The method according to any one of claims 2 to 6, wherein the parameter group comprises the third parameter, and the method further comprises:
determining, by the first apparatus, the quantity of repetition times of each bit in the encoded bit sequence based on a value of the third parameter of the first frequency domain resource and the first duration, wherein the encoded bit sequence is the bit sequence obtained by encoding the information bit in the uplink information, and the first duration is the transmission duration of the encoded bit sequence obtained by encoding the information bit when the quantity of repetition times of the encoded information bit is 1.

**8.** The method according to any one of claims 2 to 7, wherein the parameter group comprises the fourth parameter, and the method further comprises:
determining, by the first apparatus, the quantity of repetition times of the uplink information based on a value of the fourth parameter of the first frequency domain resource and the quantity of repetition times of each bit in the encoded bit sequence, wherein the encoded bit sequence is the bit sequence obtained by encoding the information bit in the uplink information.

**9.** The method according to any one of claims 1 to 8, wherein the method further comprises:

receiving, by the first apparatus, second information from the second apparatus, wherein the second information indicates a first bandwidth, the first bandwidth is a bandwidth of a first frequency band, and the first frequency band comprises the first frequency domain resource; and

determining, by the first apparatus based on the first bandwidth and a first correspondence, the first index value set corresponding to the first bandwidth, wherein

a plurality of bandwidths in the first correspondence one-to-one correspond to a plurality of index value sets, the plurality of bandwidths comprise the first bandwidth, and the first index value set is an index value set that is in the plurality of index value sets and that corresponds to the first bandwidth.

10. The method according to any one of claims 1 to 9, wherein the method further comprises:
receiving, by the first apparatus, third information from the second apparatus, wherein the third information indicates a second frequency band in the first frequency band, and the first frequency domain resource is a frequency domain resource in the second frequency band.

11. A communication method, comprising:

sending, by a second apparatus, a first index value to a first apparatus, wherein the first index value belongs to a first index value set, the first index value set comprises a plurality of index values, each index value corresponds to a combination of values of all parameters in a parameter group, the parameter group comprises a plurality of parameters, the first index value corresponds to a combination of values of all parameters in a parameter group, and the combination of values of all parameters in a parameter group corresponding to the first index value corresponds to a first frequency domain resource; and

receiving, by the second apparatus, uplink information from the first apparatus on the first frequency domain resource.

12. The method according to claim 11, wherein the parameter group comprises one or more of the following parameters:

a first parameter for determining bit transmission duration in the uplink information;
a second parameter indicating a quantity of repetition times of the uplink information;
a third parameter indicating a first frequency of the frequency domain resource; and
a fourth parameter indicating a frequency domain bandwidth of the frequency domain resource or a data rate.

13. The method according to claim 12, wherein the first frequency is a center frequency, a start frequency, or an end frequency of the frequency domain resource.

14. The method according to claim 12, wherein

the first parameter is a quantity of repetition times of each bit in an encoded bit sequence, and the encoded bit sequence is a bit sequence obtained by encoding an information bit in the uplink information; and/or
the quantity of repetition times of the uplink information is a quantity of repetition times of the information bit in the uplink information, or a quantity of repetition times of an encoded information bit in the uplink information; and/or
the third parameter is an offset of the first frequency of the frequency domain resource relative to a reference frequency.

15. The method according to any one of claims 11 to 14, wherein the method further comprises:

sending, by the second apparatus, second information to the first apparatus, wherein the second information indicates a first bandwidth, the first bandwidth is a bandwidth of a first frequency band, and the first frequency band comprises the first frequency domain resource; and

determining, by the second apparatus based on the first bandwidth and a first correspondence, the first index value set corresponding to the first bandwidth, wherein
a plurality of bandwidths in the first correspondence one-to-one correspond to a plurality of index value sets, the plurality of bandwidths comprise the first bandwidth, and the first index value set is an index value set that is in the plurality of index value sets and that corresponds to the first bandwidth.

16. The method according to any one of claims 11 to 15, wherein the method further comprises:
sending, by the second apparatus, third information to the first apparatus, wherein the third information indicates a second frequency band in the first frequency band, and the first frequency domain resource is a frequency domain resource in the second frequency band.

17. A resource allocation apparatus, comprising:

a transceiver unit, configured to receive a first index value from a second apparatus, wherein the first index value belongs to a first index value set, the first index value set comprises a plurality of index values, each index value corresponds to a combination of values of all parameters in a parameter group, the parameter group comprises a plurality of parameters, the first index value corresponds to a combination of values of all parameters in a parameter group, and the combination of values of all parameters in a parameter group corresponding to the first index value corresponds to a first frequency domain resource; and
a processing unit, configured to determine to send uplink information, wherein
the transceiver unit is further configured to send the uplink information on the first frequency domain resource.

18. The apparatus according to claim 17, wherein the parameter group comprises one or more of the following parameters:

a first parameter for determining bit transmission duration in the uplink information;
a second parameter indicating a quantity of repetition times of the uplink information;
a third parameter indicating a first frequency of the frequency domain resource; and
a fourth parameter indicating a frequency domain bandwidth of the frequency domain resource or a data rate.

19. The apparatus according to claim 18, wherein

the first parameter is a quantity of repetition times of each bit in an encoded bit sequence, and the encoded bit sequence is a bit sequence obtained by encoding an information bit in the uplink information; and/or
the quantity of repetition times of the uplink information is a quantity of repetition times of the information bit in the uplink information, or a quantity of repetition times of an encoded information bit in the uplink information; and/or
the third parameter is an offset of the first frequency of the frequency domain resource relative to a reference frequency.

20. The apparatus according to claim 18 or 19, wherein the parameter group comprises the first parameter and the second parameter;

the processing unit is further configured to determine an offset of a center frequency of the first frequency domain resource relative to the reference frequency based on a value of the first parameter of the first frequency domain resource and first duration, wherein the first duration is transmission duration of an encoded bit sequence obtained by encoding an information bit when the quantity of repetition times of the encoded information bit is 1; and
the processing unit is further configured to determine a frequency domain bandwidth of the first frequency domain resource or a transmission rate of the uplink information based on the value of the first parameter of the first frequency domain resource, a value of the second parameter of the first frequency domain resource, and the first duration.

21. The apparatus according to claim 20, wherein
a value B of the first parameter of the first frequency domain resource satisfies:

$$B=1/(T_u * \Delta f);$$

and
a value M of the second parameter of the first frequency domain resource satisfies:

$$M=\Delta f/S,$$

wherein

Δf is the offset of the first frequency of the first frequency domain resource relative to the reference frequency, S is the transmission rate of the uplink information, and Tu is the first duration.

22. The apparatus according to any one of claims 18 to 21, wherein the first frequency is a center frequency, a start frequency, or an end frequency of the frequency domain resource.

23. The apparatus according to any one of claims 18 to 22, wherein the parameter group comprises the third parameter; and
the processing unit is further configured to determine the quantity of repetition times of each bit in the encoded bit sequence based on a value of the third parameter of the first frequency domain resource and the first duration, wherein the encoded bit sequence is the bit sequence obtained by encoding the information bit in the uplink information, and the first duration is the transmission duration of the encoded bit sequence obtained by encoding the information bit when the quantity of repetition times of the encoded information bit is 1.

24. The apparatus according to any one of claims 18 to 23, wherein the parameter group comprises the fourth parameter; and
the processing unit is further configured to determine the quantity of repetition times of the uplink information based on a value of the fourth parameter of the first frequency domain resource and the quantity of repetition times of each bit in the encoded bit sequence, wherein the encoded bit sequence is the bit sequence obtained by encoding the information bit in the uplink information.

25. The apparatus according to any one of claims 17 to 24, wherein

the transceiver unit is further configured to receive second information from the second apparatus, wherein the second information indicates a first bandwidth, the first bandwidth is a bandwidth of a first frequency band, and the first frequency band comprises the first frequency domain resource; and
the processing unit is further configured to determine, based on the first bandwidth and a first correspondence, the first index value set corresponding to the first bandwidth, wherein
a plurality of bandwidths in the first correspondence one-to-one correspond to a plurality of index value sets, the plurality of bandwidths comprise the first bandwidth, and the first index value set is an index value set that is in the plurality of index value sets and that corresponds to the first bandwidth.

26. The apparatus according to any one of claims 17 to 25, wherein
the transceiver unit is further configured to receive third information from the second apparatus, wherein the third information indicates a second frequency band in the first frequency band, and the first frequency domain resource is a frequency domain resource in the second frequency band.

27. A communication apparatus, comprising:

a processing unit, configured to determine a first index value, wherein the first index value belongs to a first index value set, the first index value set comprises a plurality of index values, each index value corresponds to a combination of values of all parameters in a parameter group, the parameter group comprises a plurality of parameters, the first index value corresponds to a combination of values of all parameters in a parameter group, and the combination of values of all parameters in a parameter group corresponding to the first index value corresponds to a first frequency domain resource; and
a transceiver unit, configured to send the first index value to a first apparatus, wherein
the transceiver unit is further configured to receive uplink information from the first apparatus on the first frequency domain resource.

28. The apparatus according to claim 27, wherein the parameter group comprises one or more of the following parameters:

a first parameter for determining bit transmission duration in the uplink information;
a second parameter indicating a quantity of repetition times of the uplink information;
a third parameter indicating a first frequency of the frequency domain resource; and
a fourth parameter indicating a frequency domain bandwidth of the frequency domain resource or a data rate.

29. The apparatus according to claim 28, wherein the first frequency is a center frequency, a start frequency, or an end frequency of the frequency domain resource.

30. The apparatus according to claim 28, wherein

the first parameter is a quantity of repetition times of each bit in an encoded bit sequence, and the encoded bit sequence is a bit sequence obtained by encoding an information bit in the uplink information; and/or
the quantity of repetition times of the uplink information is a quantity of repetition times of the information bit in the uplink information, or a quantity of repetition times of an encoded information bit in the uplink information; and/or
the third parameter is an offset of the first frequency of the frequency domain resource relative to a reference frequency.

31. The apparatus according to any one of claims 27 to 30, wherein

the transceiver unit is further configured to send second information to the first apparatus, wherein the second information indicates a first bandwidth, the first bandwidth is a bandwidth of a first frequency band, and the first frequency band comprises the first frequency domain resource; and
the processing unit is further configured to determine, based on the first bandwidth and a first correspondence, the first index value set corresponding to the first bandwidth, wherein
a plurality of bandwidths in the first correspondence one-to-one correspond to a plurality of index value sets, the plurality of bandwidths comprise the first bandwidth, and the first index value set is an index value set that is in the plurality of index value sets and that corresponds to the first bandwidth.

32. The apparatus according to any one of claims 27 to 31, wherein
the transceiver unit is further configured to send third information to the first apparatus, wherein the third information indicates a second frequency band in the first frequency band, and the first frequency domain resource is a frequency domain resource in the second frequency band.

33. A computer-readable storage medium, wherein the computer-readable storage medium stores instructions, and when the instructions are run on a computer, the computer performs the method according to any one of claims 1 to 9 or the method according to any one of claims 10 to 16.

100

Reader
101
— Excitation signal → — Reflected signal ← Tag
102

FIG. 1

200

Fronthaul downlink

Receiver
201

Fronthaul uplink

Reverse link

Helper
202
— Forward link → Tag
203

FIG. 2

300

Central control unit

Fronthaul downlink

Fronthaul uplink

Reader
— Forward link →
← Reverse link
Tag

FIG. 3

400

| Second apparatus | | First apparatus |

S401: Send a first index value, where the first index value belongs to a first index value set, the first index value set includes a plurality of index values, each index value corresponds to values of all parameters in a parameter group, and the parameter group includes a plurality of parameters

S402: Send uplink information on a first frequency domain resource

FIG. 4

Information bit

Manchester encoding

Encoded bit sequence

Encoded bit sequence repetition

Repeated encoded bit sequence

M times of repetition

$0 \rightarrow 01 \rightarrow 01...01$

M times of repetition

$1 \rightarrow 10 \rightarrow 10...10$

$M \in \{1, 2, 4, ...\}$

B times of repetition

$0 \rightarrow 0...0$

B times of repetition

$1 \rightarrow 1...1$

$B \in \{1, 2, 4, ...\}$

FIG. 4A

Second sideband    First sideband

Fc–Δf    Fc    Fc+Δf    Frequency

## FIG. 5

Second sideband    First sideband

–Δf–S    –Δf    –Δf+S    0    Δf–S    Δf    Δf+S    Frequency offset
relative to Fc

## FIG. 6

Second sideband  First sideband

–5    –2.5    0    2.5    5    Frequency offset
relative to a reference
frequency (kHz)

## FIG. 7

Second sideband    First sideband

–15    –10    –5    0    5    10    15    Frequency offset
relative to a reference
frequency (kHz)

## FIG. 8

Second sideband        First sideband

−160    −80    0    80    160    Frequency offset relative to a reference frequency (kHz)

FIG. 9

180 kHz

Third frequency band

−90 kHz

Center frequency of a first frequency band

180 kHz

Second frequency band

−90 kHz

FIG. 10

FIG. 11

1200

| Second apparatus | | First apparatus |

S1201: Send fourth information, where the fourth information includes a first quantity, and the first quantity is a quantity of frequency domain resources

S1202: Determine a first frequency domain resource group based on the first quantity and a second correspondence, where the first frequency domain resource group includes the first quantity of frequency domain resources, and the frequency domain resource in the first frequency domain resource group is a candidate resource for sending uplink information

S1203: Send the uplink information to the second apparatus on a first frequency domain resource, where the first frequency domain resource belongs to the first frequency domain resource group

FIG. 12

First frequency band

| Frequency domain resource 0 | Fc+360 kHz |
| Frequency domain resource 1 | Fc+180 kHz |
| Frequency domain resource 2 | Fc |
| Frequency domain resource 3 | Fc−180 kHz |
| | Fc−360 kHz |

FIG. 13

EP 4 432 714 A1

| Frequency band 0 | | Frequency band 1 | | Frequency band 2 | |
|---|---|---|---|---|---|
| Quantity indication field 0 | Resource indication field 0 | Quantity indication field 1 | Resource indication field 1 | Quantity indication field 2 | Resource indication field 2 |

FIG. 14

| Frequency band 0 | Frequency band 1 | Frequency band 2 | Frequency band 0 | Frequency band 1 | Frequency band 2 |
|---|---|---|---|---|---|
| Quantity indication field 0 | Quantity indication field 1 | Quantity indication field 2 | Resource indication field 0 | Resource indication field 1 | Resource indication field 2 |

FIG. 15

EP 4 432 714 A1

Communication apparatus 1600

Processing unit 1610

Transceiver unit 1620

Storage unit 1630

FIG. 16

Communication device 1700

Transceiver 1710

Processor 1720

Memory

FIG. 17

## INTERNATIONAL SEARCH REPORT

International application No.

**PCT/CN2022/133832**

| A. | CLASSIFICATION OF SUBJECT MATTER |
|---|---|

H04W16/10(2009.01)i

According to International Patent Classification (IPC) or to both national classification and IPC

| B. | FIELDS SEARCHED |
|---|---|

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

3GPP, CNTXT, ENTCTC: 标签, 参数, 带宽, 读出装置, 读头, 读写器, 分配, 蜂窝, 共享, 频点, 频域, 频域资源, 频域资源分配, 上行, 射频标签, 时长, 数据载体, 索引, 下行, 应答器, 阅读器, 重复次数, 资源, 资源分配, RFID; resource, allocate, frequency, uplink

| C. | DOCUMENTS CONSIDERED TO BE RELEVANT | |
|---|---|---|
| Category* | Citation of document, with indication, where appropriate, of the relevant passages | Relevant to claim No. |
| X | CN 108347776 A (HUAWEI TECHNOLOGIES CO., LTD.) 31 July 2018 (2018-07-31) description, paragraphs 71-123 | 1, 2, 11, 12, 17, 18, 27, 28, 33 |
| A | CN 109769300 A (HUAWEI TECHNOLOGIES CO., LTD.) 17 May 2019 (2019-05-17) entire document | 1-33 |
| A | CN 109831827 A (HUAWEI TECHNOLOGIES CO., LTD.) 31 May 2019 (2019-05-31) entire document | 1-33 |
| A | CN 111800874 A (BIONLINK (BEIJING) TECHNOLOGY CO., LTD.) 20 October 2020 (2020-10-20) entire document | 1-33 |
| A | CN 111972020 A (HUAWEI TECHNOLOGIES CO., LTD.) 20 November 2020 (2020-11-20) entire document | 1-33 |
| A | CN 113630874 A (VIVO COMMUNICATION TECHNOLOGY CO., LTD.) 09 November 2021 (2021-11-09) entire document | 1-33 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 February 2023** | **08 February 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/133832**

| Patent document cited in search report | | | Publication date (day/month/year) | Patent family member(s) | | | Publication date (day/month/year) |
|---|---|---|---|---|---|---|---|
| CN | 108347776 | A | 31 July 2018 | US | 2019349943 | A1 | 14 November 2019 |
| | | | | US | 11064498 | B2 | 13 July 2021 |
| | | | | EP | 3567954 | A1 | 13 November 2019 |
| | | | | EP | 3567954 | A4 | 29 January 2020 |
| | | | | WO | 2018137690 | A1 | 02 August 2018 |
| CN | 109769300 | A | 17 May 2019 | EP | 3866529 | A1 | 18 August 2021 |
| | | | | EP | 3573392 | A1 | 27 November 2019 |
| | | | | EP | 3573392 | A4 | 08 April 2020 |
| | | | | EP | 3573392 | B1 | 10 March 2021 |
| | | | | BR | 112020008721 | A2 | 03 November 2020 |
| | | | | US | 2022345260 | A1 | 27 October 2022 |
| | | | | KR | 20200070350 | A | 17 June 2020 |
| | | | | KR | 102332979 | B1 | 01 December 2021 |
| | | | | RU | 2020119141 | A3 | 10 December 2021 |
| | | | | RU | 2020119141 | A | 24 December 2021 |
| | | | | RU | 2763019 | C2 | |
| | | | | JP | 2021502758 | A | 28 January 2021 |
| | | | | JP | 6982690 | B2 | 17 December 2021 |
| | | | | PL | 3573392 | T3 | 11 October 2021 |
| CN | 109831827 | A | 31 May 2019 | US | 2019386798 | A1 | 19 December 2019 |
| | | | | US | 10623159 | B2 | 14 April 2020 |
| | | | | US | 2021203463 | A1 | 01 July 2021 |
| | | | | KR | 20190039568 | A | 12 April 2019 |
| | | | | KR | 102225238 | B1 | 09 March 2021 |
| | | | | JP | 2019535186 | A | 05 December 2019 |
| | | | | JP | 6874129 | B2 | 19 May 2021 |
| | | | | EP | 3554116 | A1 | 16 October 2019 |
| | | | | EP | 3554116 | A4 | 04 March 2020 |
| | | | | EP | 3554116 | B1 | 21 April 2021 |
| | | | | US | 2019097774 | A1 | 28 March 2019 |
| | | | | US | 10530547 | B2 | 07 January 2020 |
| | | | | BR | 112019004076 | A2 | 28 May 2019 |
| | | | | US | 2020220683 | A1 | 09 July 2020 |
| | | | | US | 10965419 | B2 | 30 March 2021 |
| | | | | JP | 2021122121 | A | 26 August 2021 |
| | | | | WO | 2019029348 | A1 | 14 February 2019 |
| | | | | EP | 3890385 | A2 | 06 October 2021 |
| | | | | EP | 3890385 | A3 | 22 December 2021 |
| CN | 111800874 | A | 20 October 2020 | None | | | |
| CN | 111972020 | A | 20 November 2020 | None | | | |
| CN | 113630874 | A | 09 November 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111489076